Europäisches Patentamt

European Patent Office

Office européen des brevets

(19)

(11) Publication number : **0 577 428 A2**

(12) **EUROPEAN PATENT APPLICATION**

(21) Application number : **93305182.3**

(22) Date of filing : **01.07.93**

(51) Int. Cl.⁵ : **H04N 7/13, H04N 7/137**

(30) Priority : **03.07.92 JP 177217/92**
**23.10.92 JP 286186/92**
**02.11.92 JP 294654/92**
**28.05.93 JP 126778/93**

(43) Date of publication of application :
**05.01.94 Bulletin 94/01**

(84) Designated Contracting States :
**DE ES FR GB NL**

(71) Applicant : **SONY CORPORATION**
**7-35 Kitashinagawa 6-chome Shinagawa-ku**
**Tokyo 141 (JP)**

(72) Inventor : **Yonemitsu, Jun, c/o Int. Prop.**
**Division**
**Sony Corporation, 6-7-35, Kitashinagawa**
**Shinagawa-ku, Tokyo 141 (JP)**
Inventor : **Tahara, Katsumi, c/o Int. Prop.**
**Division**
**Sony Corporation, 6-7-35, Kitashinagawa**
**Shinagawa-ku, Tokyo 141 (JP)**
Inventor : **Suzuki, Teruhiko, c/o Int. Prop.**
**Division**
**Sony Corporation, 6-7-35, Kitashinagawa**
**Shinagawa-ku, Tokyo 141 (JP)**

(74) Representative : **Harris, Ian Richard et al**
**c/o D. Young & Co., 21 New Fetter Lane**
**London EC4A 1DA (GB)**

(54) **Image signal coding and decoding and image signal recording medium.**

(57) The present invention reproduces an input image of half the normal resolution with respect to the vertical and horizontal directions in high picture quality by processing a coded bit stream of a normal resolution.

Difference signal (mismatching error signal) representing the difference between a predicted image of the normal resolution and a predicted image of a half resolution with respect to the vertical and horizontal directions is coded and the coded difference signal is transmitted. When producing the predicted image, image data is subjected to motion compensation according to a specified prediction mode.

FIG. 1

EP 0 577 428 A2

The present invention relates to an image signal coding method, an image signal decoding method, an image signal encoder, an image signal decoder and an image signal recording medium suitable for use for compressing, for example, High Definition Television signals (HDTV signals) and recording the compressed HDTV signals in a recording medium, such as an optical disk, magnetooptic disk or a magnetic tape, reproducing the recorded compressed HDTV signals, expanding the reproduced compressed HDTV signals to restore the normal range and displaying the restored HDTV signals.

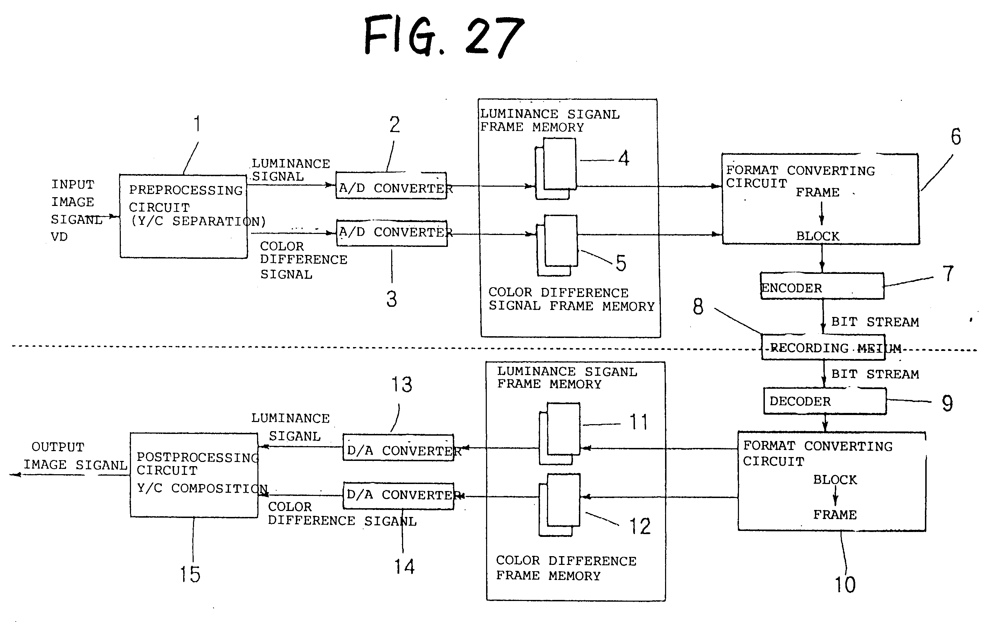

Fig. 27 shows a conventional image signal encoder and a conventional image signal decoder by way of example. The image signal encoder includes a preprocessing circuit 1 which separates the luminance signal (Y signal) and the color difference signal (C signal) of an input image signal, such as a HDTV signal. An A/D converter 2 converts the luminance signal into a corresponding digital luminance signal and stores the digital luminance signal temporarily in a frame memory 4. An A/D converter converts the color difference signal into a corresponding digital color difference signal and stores the digital color difference signal temporarily in a frame memory 5. A format conversion circuit 6 converts the digital luminance signal and the digital color difference signal of a frame format stored in the frame memories 4 and 5 into corresponding luminance data and color difference data of a block format, and gives the luminance data and the color difference data of a block format to an encoder 7. The encoder 7 encodes the input signals and gives a bit stream representing the coded input signals to a recording medium 8, such as an optical disk, a magnetooptic disk or a magnetic tape for recording.

A decoder 9 decodes the data reproduced from the recording medium 8 in a bit stream. A format conversion circuit 10 converts the decoded data of a block format provided by the decoder 9 into corresponding decoded of a frame format. Luminance data and color difference data provided by the format conversion circuit 10 are stored respectively in frame memories 11 and 12. The luminance data and the color difference data read from the frame memories 11 and 12 are converted into corresponding analog luminance signal and analog color difference signal respectively by D/A converters 13 and 14. A post processing circuit 15 composes the analog luminance signal and the analog color difference signal to give an output image signal to an external circuit, not shown.

The encoder 7 compresses the input image data and gives the compressed image data to the recording medium 8. The decoder expands the compressed input data and gives the expanded image data to the format conversion circuit 10. The quantity of the data to be recorded in the recording medium 8 can be reduced by compression. The line correlation or interframe correlation of image signals is used for compression.

When line correlation is used, the image signal can be compressed by, for example, DCT (Discrete Cosine Transformation).

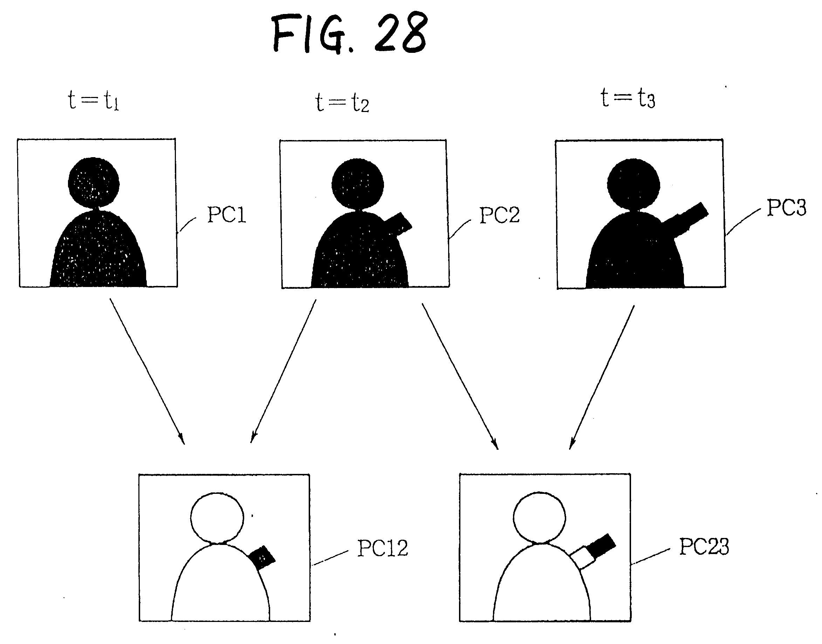

When interframe correlation is used, the image signal can be further compressed for coding. For example, suppose that frame pictures PC1, PC2 and PC3 are produced respectively at times t1, t2 and t3 as shown in Fig. 28. The difference between image signals respectively representing the frame pictures PC1 and PC2 is calculated to produce a frame picture PC12, and the difference between the frame pictures PC2 and PC3 is calculated to produce a frame picture PC23. Since the difference between the successive frame pictures, in general, is not very large, a difference signal representing the difference between the successive frame pictures is small. The difference signal is coded to reduce the quantity of data.

However, if only the difference signal is used, the original picture cannot be restored. Accordingly, one of an I picture, a P picture and a B picture is used as a frame picture to encode the image signal.

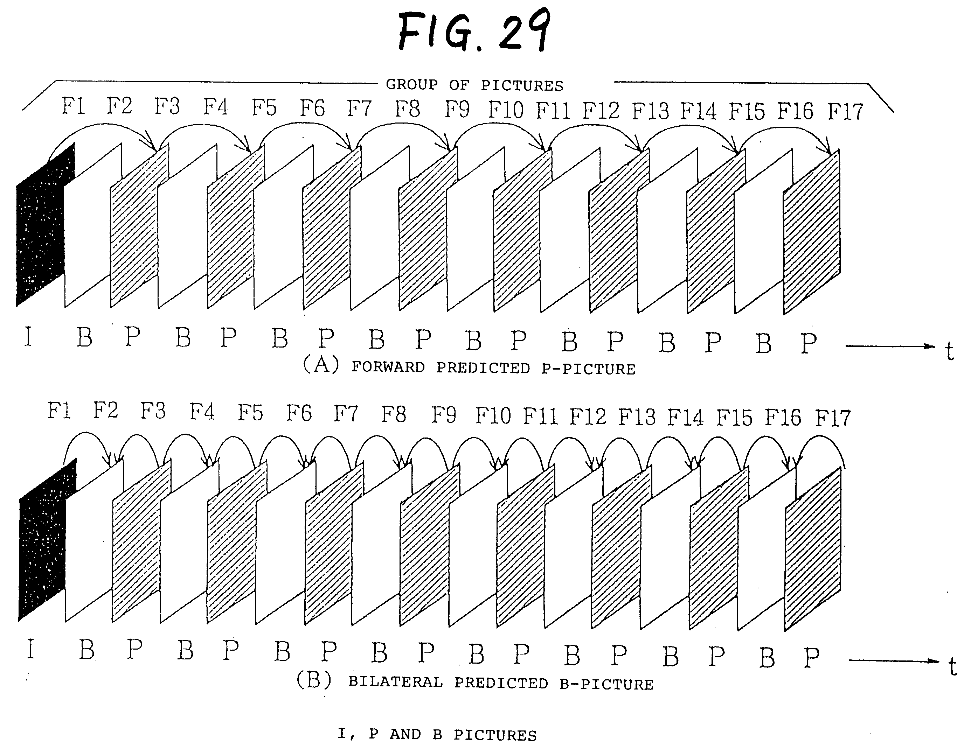

For example, as shown in Fig. 29, a group of pictures including image signals representing frames F1 to F17 is processed in a unit. The image signal representing the head frame F1 is coded in an I picture, the image signal representing the second frame F2 is coded in a B picture and the image signal representing the third frame F3 is coded in a P picture. The image signals representing the fourth frame F4 to the seventeenth frame F17 are coded alternately in B pictures and P pictures.

The image signal representing the I picture is obtained by coding the image signal representing the corresponding frame. Basically, the image signal representing the P picture is obtained by coding the difference between the image signal representing the corresponding frame and the image signal representing the preceding I picture or P picture as shown in Fig. 29(A). The image signal representing the B picture is obtained by coding the difference between the image signal representing the corresponding frame and the mean of of the image signals representing the preceding and succeeding frames.

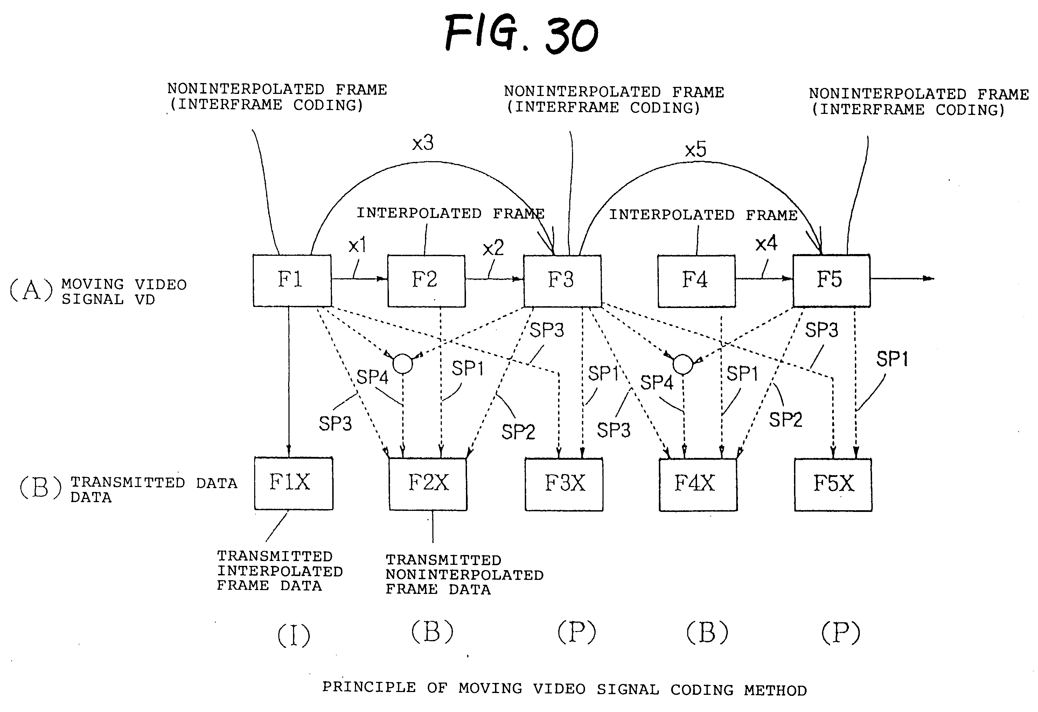

Fig. 30 is a diagrammatic view of assistance in explaining the principle on which is based a method of coding a moving picture. As shown in Fig. 30, the first frame F1 is processed as an I picture to provide data F1X on a transmission line (interframe coding). The second frame F2 is processed as a B picture, in which the difference between the second frame F2 and the means of the preceding frame F1 and the succeeding frame F3 is calculated, and then the difference is coded to provide transmission data F2X..

The second frame F2 can be processed as a B picture in four processing modes. In a first processing mode, the data representing the frame F2 is coded to provide the transmission data F2X (SP1) (interframe coding mode), which is the same as the processing mode for processing the I picture. In a second processing mode, the difference (SP2) between the frame F2 and the succeeding frame F3 is calculated and the difference is coded for transmission (backward predictive coding mode). In a third processing mode, the difference (SP3) between the frame F2 and the preceding frame F1 is coded for transmission (forward predictive coding mode). In a fourth processing mode, the difference (SP4) between the frame F2 and the mean of the preceding frame F1 and the succeeding frame F3 is calculated and the difference is coded to transmit transmission data F2X (bilateral predictive coding mode).

One of the these processing modes, that will provide the least amount of data is employed.

A motion vector x1 representing the motion of the picture of the objective frame for the calculation of the difference (a motion vector between the frames F1 and F2) (forward prediction) or a motion vector x2 (a motion vector between the frames F3 and F2 (backward prediction) or the motion vectors x1 and x2 are transmitted (bilateral prediction) as the difference data.

Difference data (SP3) representing the difference between the frame F3 of the P picture and the preceding frame F1 as a predicted picture, and a motion vector x3 are calculated, and the difference data and the motion vector x3 are transmitted as transmission data F3X (forward predictive coding mode) or the picture data (SP1) of the frame F3 is transmitted as the transmission data F3X (interframe coding mode). Either the forward predictive coding mode or the interframe coding mode that will more effective on reducing the amount of data is employed.

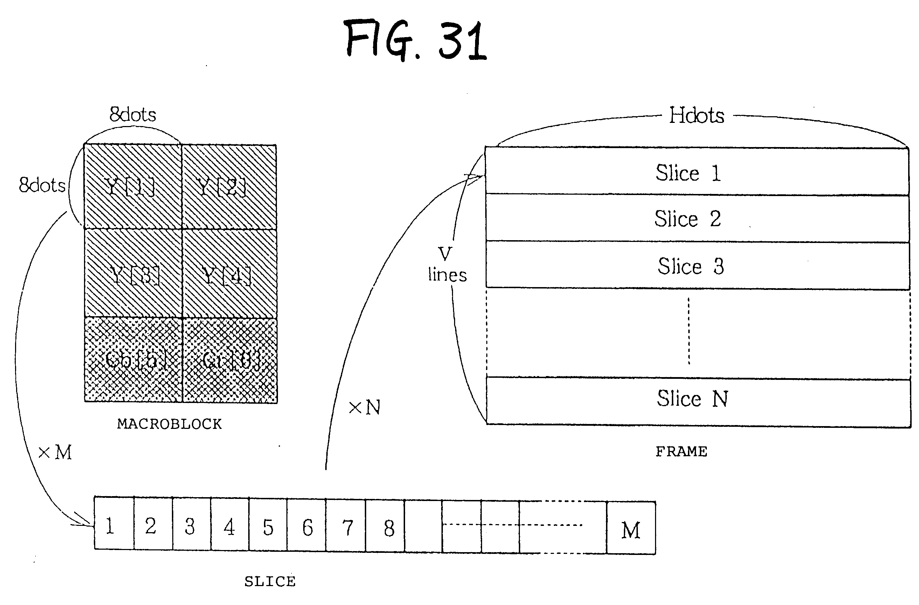

As shown in Fig. 31, image data representing a picture of one frame consisting of V lines each of H dots per inch is sliced into N slices, i.e., a slice 1 to a slice N, each of, for example, sixteen lines, and each slice includes M macroblocks. Each macroblock comprises block data Y[1] to Y[4] including luminance data for 8∗8 pixels, and block data Cb[5] to Cr[6] including color difference data corresponding to all the pixel data (16∗16 pixels data) of the block data Y[1] to Y[4].

Thus, the macroblock has the image data Y[1] to Y[4] of the 16∗16 pixels successively arranged along the horizontal and vertical scanning directions as a unit for the luminance signal, and processes the two color difference signals for time-base multiplexing after data compression and allocates the color difference data for the 16∗16 pixels to the blocks Cr[6] and Cb[4] each of 8∗8 pixels to process one unit. The image data represented by the macroblocks are arranged successively in the slice, and the image data represented by the blocks (8∗8 dots) are arranged successively in a raster scanning sequence in the macroblock (16∗16 dots).

The image data Y[1] to Y[4] and the color difference data Cb[5] and Cr[5] are transmitted in that order. The numerals in the reference characters denoting the data indicate the data's turn for transmission.

Low-resolution image data can be obtained by compressing (thinning out) high-resolution image data, such as high definition television data, by half with respect to both the vertical and horizontal directions. The aspect ratio of the low-resolution image data can be changed from 16:9 to 4:3, and the low-resolution image data can be displayed on a display of the NTSC system.

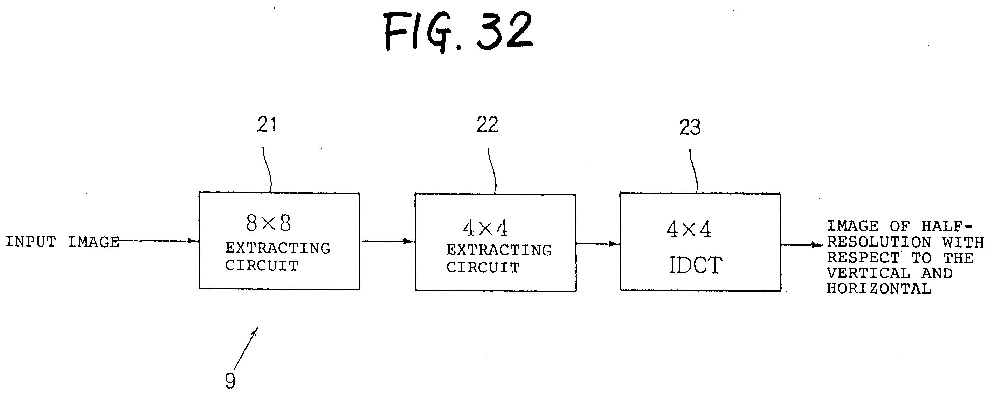

When displaying a high-resolution picture after compressing the same to 1/4 (1/2 ∗ 1/2), the decoder 9 shown in Fig. 27 is formed, for example, in a configuration shown in Fig. 32. In this case, the image data is compressed by the encoder 7 in a DCT mode (discrete cosine transformation mode).

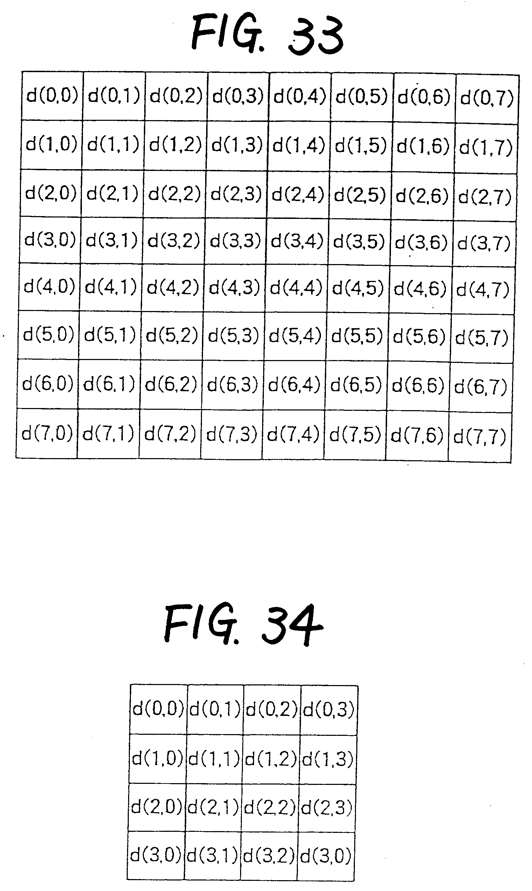

Image data (DCT coefficients) obtained by the DCT of the image data in units each of 8∗8 pixels is given to the extraction circuit 21 of the decoder 9, and then the extraction circuit 21 extracts 8∗8 data of 8∗8 pixels as shown in Fig. 33. The 8∗8 data are DCT coefficients. In Fig. 33, a lower DCT coefficient corresponds to a higher-frequency component of the picture than an upper DCT coefficient with respect to the vertical direction, and a right-hand DCT coefficient corresponds to a higher-frequency component of the picture than a left-hand DCT coefficient with respect to the horizontal direction.

An extracting circuit 22 disposed behind the extracting circuit 21 extracts the 4∗4 DCT coefficients shown in Fig. 34 corresponding to the lower-frequency components among the 8∗8 DCT coefficients shown in Fig. 33. Thus, the 8∗8 pixels data is thinned out by half with respect to both the horizontal direction and the vertical direction to produce 4∗4 pixels data. The DCT coefficients shown in Fig. 34 are the 4∗4 DCT coefficients in the upper lefthand portion of Fig. 33. The 4∗4 DCT coefficients extracted by the extracting circuit 22 are given to an Inverse Discrete Cosine Transformation circuit (IDCT circuit) 23 for inverse discrete cosine transformation to obtain image data (4∗4 pixels data) of a resolution of 1/2 with respect to both the horizontal direction and the vertical direction.

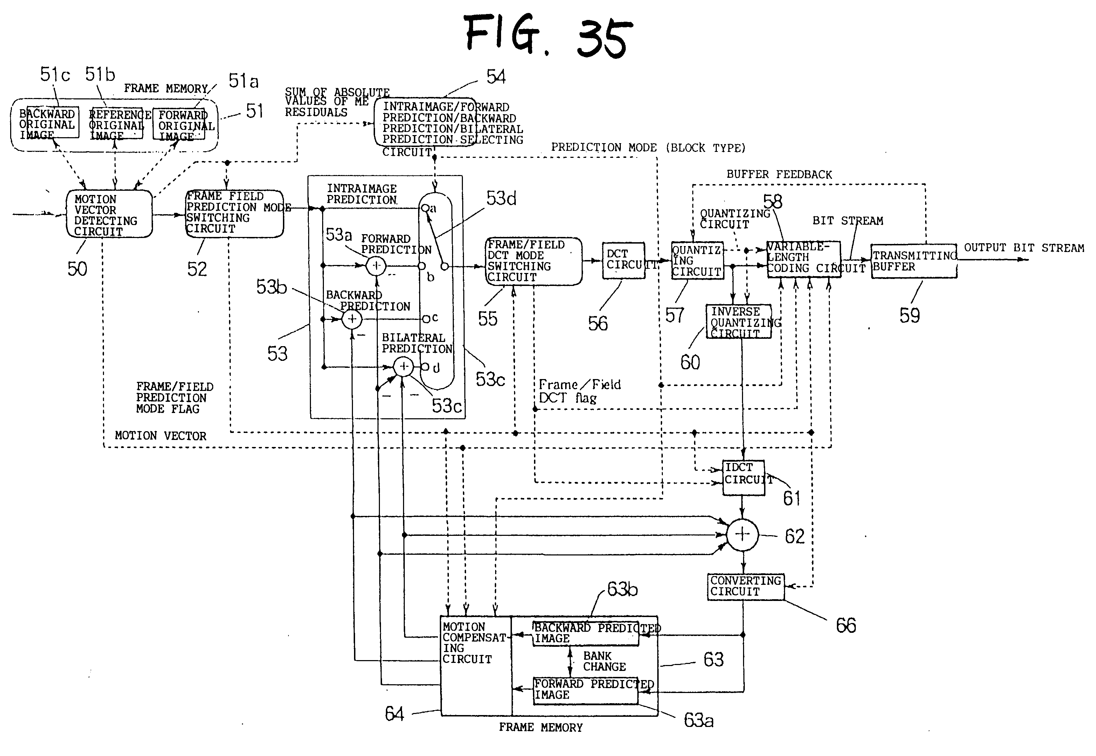

Fig. 35 is a block diagram showing a circuit configuration of the encoder 7 by way of example.

Macroblocks of image data to be coded, such as image data of high-resolution HDTV picture, are applied to a motion vector detecting circuit 50. The motion vector detecting circuit 50 processes the image data of each frame in an I picture, a P picture or a B picture according to a specified sequence. The mode of selection of an I picture, P picture or a B picture in processing the image data of the frames sequentially applied to the motion vector detecting circuit 50 is determined beforehand. For example, a group of pictures of the frames F1 to F17 are processed in I pictures, P pictures and B pictures, respectively, as shown in Fig. 29.

The image data of the frame to be processed in an I picture, for example, the frame F1, is transferred to and stored in the forward original image area of a frame memory 51, the image data of the frame to be processed in a B picture, for example, the frame F2, is transferred to and stored in the reference original image area 51b of the frame memory 51, and the image data of the frame to be processed in a P picture, for example, the frame F3, is transferred to and stored in the backward original image area 51c of the frame memory 51.

When the image of a frame to be processed in a B picture (frame F4) or P picture (frame F5) is given in the next cycle to the motion vector detecting circuit 50, the image data of the first P picture (frame F3) stored in the backward original image area 51c is transferred to the forward original image area 51a, the image data of the next B picture (frame F4) is stored (overwritten) in the reference original image area 51b, the image data of the next P picture (frame F5) is stored (overwritten) in the backward original image area 51c. These operations are repeated sequentially.

The image data of the pictures stored in the frame memory 51 is read from the frame memory 51, and then a prediction mode switching circuit 52 processes the image data in a frame prediction mode or a field prediction mode. An arithmetic unit (prediction circuit) 53 operates under control of a prediction mode selecting circuit 54 for intraimage prediction, forward prediction, backward prediction or bilateral prediction. The selection of one of these predictive coding modes is dependent on a prediction error signal representing the difference between the objective reference original image and the corresponding predicted image. Accordingly, the motion vector detecting circuit 50 produces the sum of absolute values or the sum of squares of prediction error signals for use for the selection of the prediction mode.

The operation of the prediction mode switching circuit 52 for selecting either the frame prediction mode or the field prediction mode will be described hereinafter.

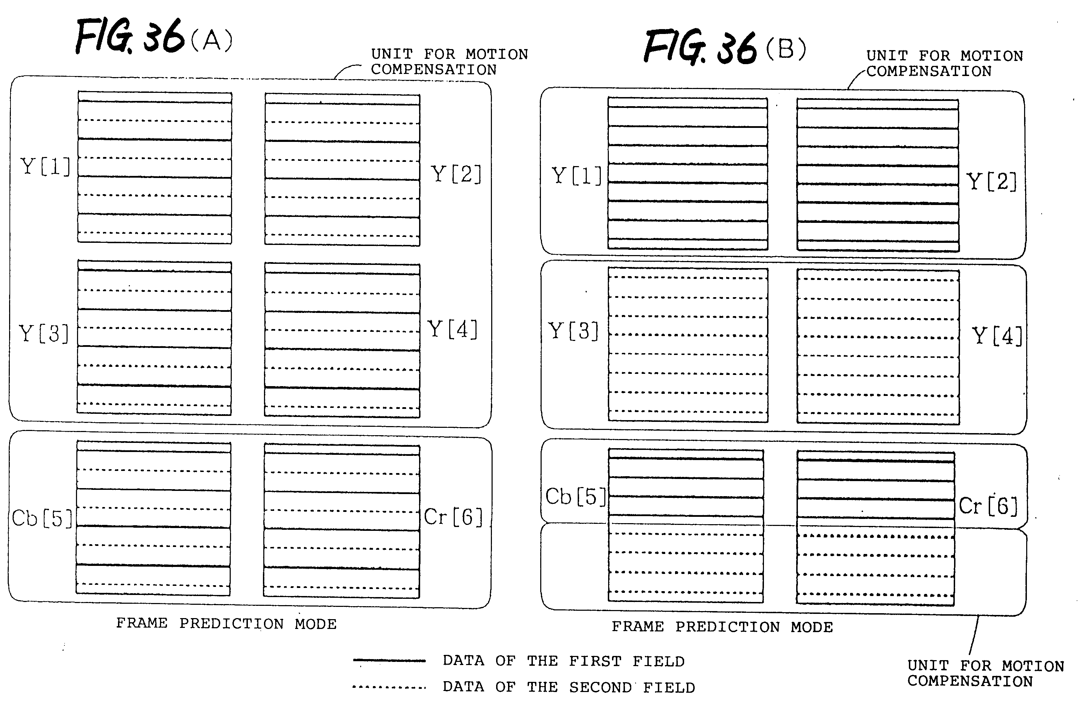

When the frame prediction mode is selected, the prediction mode switching circuit 52 transfers the four luminance blocks Y[1] to Y[4] given thereto from the motion vector detecting circuit 50 as they are to the arithmetic unit 53. In this case, as shown in Fig. 36(A), each luminance block has, in combination, both the data representing the lines of odd fields and that representing the liens of even fields. In the frame prediction mode, the four luminance blocks (macroblocks) are processed in a unit for prediction, and a single motion vector is determined for the four luminance blocks.

When the field prediction mode is selected, the prediction mode switching circuit 52 changes the luminance blocks Y[1] and Y[2] among the four luminance blocks of an arrangement shown in Fig. 36(A) received from the motion vector detecting circuit 50, for example, into those of dots of lines of odd fields, changes the other luminance blocks Y[3] and Y[4] into those of lines of even fields as shown in Fig. 36(B), and gives an output signal of an arrangement shown in Fig. 36(B) to the arithmetic unit 53. In this case, one motion vector (motion vector for the odd fields) corresponds to the two luminance blocks Y[1] and Y[2], another motion vector (motion vector for the even fields) corresponds to the other two luminance blocks Y[3] and Y[4].

The motion vector detecting circuit 50 gives a signal representing the sum of absolute values of prediction errors in the frame prediction mode, and a signal representing the sum of absolute values of prediction errors in the field prediction mode to the prediction mode switching circuit 52. The prediction mode selecting circuit 52 compares the sums of absolute values of prediction errors in the frame prediction mode and the field prediction mode, carries out a process corresponding to the prediction mode smaller than the other in the sum of absolute values of prediction errors, and gives data obtained by the process to the arithmetic unit 53.

Practically, such a process is carried out by the motion vector detecting circuit 50. The motion vector detecting circuit 50 gives a signal of an arrangement corresponding to the selected mode to the prediction mode switching circuit 52, and then the prediction mode switching circuit 52 gives the input signal as it is to the arithmetic unit 53.

In the frame prediction mode, the color difference signal having, in combination, both the data representing the lines of the odd fields and the data representing lines of the even fields as shown in Fig. 36(A) is given to the arithmetic unit 53. In the field prediction mode, the respective upper halves (four lines) of the color differencc blocks Cb[5] and Cr[6] are changed into a color difference signal representing odd fields corresponding to the luminance blocks Y[1] and Y[2], and the respective lower halves (four lines) of the color difference blocks Cb[5] and Cr[6] are changed into a color difference signal representing even fields corresponding to the luminance blocks Y[3] and Y[4] as shown in Fig. 36(B).

The motion vector detecting circuit 50 produces the sum of absolute values of prediction errors for use for determining a prediction mode for intraimage prediction, forward prediction, backward prediction or bilateral prediction by the prediction mode selecting circuit 54.

The difference between the absolute value $|\Sigma A_{ij}|$ of the sum $|A_{ij}|$ of the signals $A_{ij}$ of the macroblocks of a reference original image and the sum $|\Sigma_{ij}|$ of the absolute values $|A_{ij}|$ of the signals $A_{ij}$ of

the macroblocks is calculated as the sum of absolute values of prediction errors for intraimage prediction. The sum $\Sigma | Aij - Bij |$ of the absolute values $| Aij - Bij |$ of the differences (Aij - Bij) between the signals Aij of the macroblocks of the reference original image and the signals Bij of the macroblocks of a predicted image is calculated as the sum of absolute values of prediction errors for forward prediction. The sums of absolute values of prediction errors for backward prediction and bilateral prediction are calculated in manners similar to that of calculating the sum of absolute values of prediction errors for forward prediction, using predicted images different from that used for the calculation of the sum of absolute values of prediction errors for forward prediction.

These sums of absolute values are given to the prediction mode selecting circuit 54. The prediction mode selecting circuit 54 selects the smallest sum of absolute values of prediction errors among those given thereto as the sum of absolute value of prediction errors for inter-prediction, compares the smallest sum of absolute values of prediction errors and the sum of absolute values of prediction errors for intraimage prediction, selects the smaller sum of absolute values of prediction errors, and selects a prediction mode corresponding to the selected smaller sum of absolute values of prediction errors; that is, the intraimage prediction mode is selected if the sum of absolute values of prediction errors for intraimage prediction is smaller, the forward prediction mode, the backward prediction mode or the bilateral prediction mode corresponding to the smallest sum of absolute values of prediction errors is selected if the sum of absolute values of prediction errors for the inter-prediction is smaller.

Thus, the motion vector detecting circuit 50 gives the signals representing the macroblocks of the reference original image and having an arrangement corresponding to the prediction mode selected by the prediction mode switching circuit 52, i.e., either the frame prediction mode or the field prediction mode, through the prediction mode switching circuit 52 to the arithmetic circuit 53, detects a motion vector between a predicted image corresponding to the prediction mode selected by the prediction mode selecting circuit 54 among those four prediction modes and the reference original image, and gives the detected motion vector to a variable-length cording circuit 58 and a motion compensating circuit 64. As mentioned above, a motion vector that makes the corresponding sum of absolute values of prediction errors smallest is selected.

The prediction mode selecting circuit 54 sets an intraframe (image) prediction mode, in which motion compensation is not performed, as a prediction mode while the motion vector detecting circuit 50 is reading the image data of an I picture from the forward original image area 51a, and connects the movable contact 53d of the switch of the arithmetic unit 53 to the fixed contact a of the same. Consequently, the image data of the I picture is applied to a DCT mode switching circuit 55.

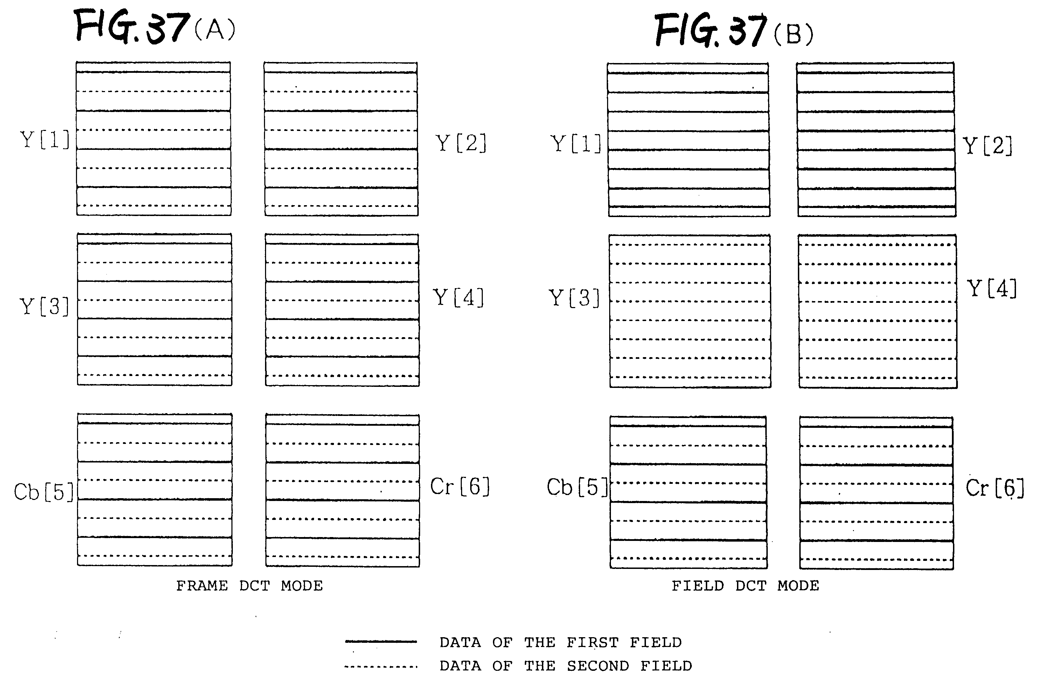

The DCT mode switching circuit 55 gives data representing four luminance blocks having, in combination, lines of odd fields and those of even fields as shown in Fig. 37(A) (frame DCT mode) or data representing four luminance blocks individually having lines of odd fields and those of even fields as shown in Fig. 37(B) (field DCT mode) to a DCT circuit 56.

The DCT mode switching circuit 55 compares the coding efficiency of the frame DCT mode and that of the field DCT mode, and selects the DCT mode which is higher in coding efficiency than the other.

For example, the DCT mode switching circuit 55 forms the data representing blocks having, in combination, lines of odd fields and those of even fields as shown in Fig. 37(A), calculates the differences between signals representing the vertically adjacent lines of odd fields and even fields, and calculates the sum of absolute values of the differences (or the sum of squares of the differences) or forms the data representing blocks of lines of odd fields and those of lines of even fields as shown in Fig. 37(B), calculates the differences between the vertically adjacent lines of odd fields and those between the vertically adjacent lines of even fields, calculates the sum of absolute values (or the sum of squares) of the former differences and the sum of absolute values (or the sum of squares) of the latter differences, compares the former and latter sums of absolute values, and selects a DCT mode corresponding to the smaller sum of absolute values; that is, the frame DCT mode is selected when the former sum of absolute value is smaller or the field DCT mode is selected when the latter sum of absolute value is smaller.

When the prediction mode switching circuit 52 selects the frame prediction mode (Fig. 36(A)) and the DCT mode switching circuit 55 selects the frame DCT mode (Fig. 37(A)), and when the prediction mode switching circuit 52 selects the field prediction mode (Fig. 36(B)) and the DCT mode switching circuit 55 selects the field DCT mode (Fig. 37(B), the DCT mode switching circuit 55 need not change the arrangement of the data.

When the prediction mode switching circuit 52 selects the field prediction mode (Fig. 36(B)) and the DCT mode switching circuit 55 selects the frame DCT mode (Fig. 37(A)), and when the prediction mode switching circuit 52 selects the frame prediction mode (Fig. 36(A)) and the DCT mode switching circuit 55 selects the field DCT mode (Fig. 37(B)), the DCT mode switching circuit 55 rearranges the data. The prediction switching circuit 52 gives a prediction flag indicating either the frame prediction mode or the field prediction mode to the DCT mode switching circuit 55 to instruct the DCT mode switching circuit 55 for such a process.

The DCT mode switching circuit 55 gives data of an arrangement corresponding to the selected DCT mode to the DCT circuit 56 and gives a DCT flag indicating the selected DCT mode to the variable-length coding circuit 58 and a converting circuit 65.

The prediction mode in the prediction mode switching circuit 52 (Fig. 36) and the DCT mode in the DCT mode switching circuit 55 (Fig. 37) are substantially the same in the arrangement of the data of the luminance blocks.

When the prediction mode switching circuit 52 selects the frame prediction mode, in which the blocks have both odd lines and even lines in combination, it is highly probable that the DCT mode switching circuit 55 selects the frame DCT mode, in which the blocks have both odd lines and even lines in combination. When the prediction mode switching circuit 52 selects the frame prediction mode, in which the blocks have odd lines and even lines individually, it is highly probable that the DCT mode switching circuit 55 selects the field DCT mode, in which the data of odd fields and that of even fields are separated from each other.

However, the DCT mode switching circuit 55 does not always select either the frame DCT mode or the field DCT mode in such a manner; the prediction mode switching circuit 52 determines a mode so that the sum of absolute values of prediction errors is the smallest, and the DCT mode switching circuit 55 determines the mode so that coding can be achieved at a high coding efficiency.

The DCT mode switching circuit 55 gives image data representing an I picture to the DCT circuit 56 and the image data is transformed into DCT coefficients by DCT (discrete cosine transformation). The DCT coefficients are quantized at a quantizing step corresponding to the amount of data stored stored in a transmission buffer memory 59 by a quantizing circuit 57, and the quantized DCT coefficients are given to the variable-length coding circuit 58.

The variable-length coding circuit 58 converts the image data (in this case, the data of the 1 picture) received from the quantizing circuit 57 into variable-length codes, such as Huffman codes, according to the quantizing step (scale) used for quantization by the quantizing circuit 57, and gives the variable-length codes to the transmission buffer memory 59.

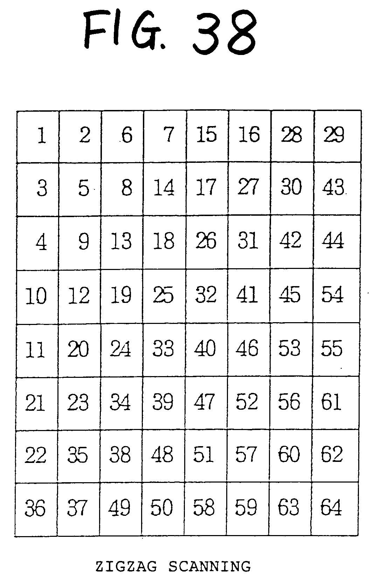

The quantized DCT coefficients for a low-frequency range (DCT coefficients having large power) are in the upper left-hand corner (the DCT coefficients in the upper left-hand corner of the table of 8*8 DCT coefficients shown in Fig. 33) owing to the characteristics of DCT. Generally, the coefficient is coded in a combination of a run length of successive zeros (zero-run length) and a coefficient (level) by variable-length coding. A coding method using zero-run lengths and levels in combination is called a run length coding method. When coefficients are coded by a run length coding method, long zero-runs can be formed by transmitting the coefficients in zigzag scanning sequence as shown in Fig. 38, in which numerals indicate coefficients' turns of transmission, so that the data can be compressed.

The variable-length coding circuit 58 codes by variable-length coding the quantizing step (scale) provided by the quantizing circuit 57, the prediction mode (block type) (intraimage prediction mode, forward prediction mode, backward prediction mode or bilateral prediction mode) selected by the prediction mode selecting circuit 54, the motion vector determined by the motion vector detecting circuit 50, the prediction flag (frame prediction mode flag or field prediction mode flag) set by the prediction mode switching circuit 52, and the DCT flag (frame DCT mode flag or field DCT mode flag) set by the DCT mode switching circuit 55 together with the zigzag scanned quantized data.

After storing the transmission data temporarily, the transmission buffer 59 sends out the transmission data in a bit stream at specified time and controls the quantizing scale by sending a quantization control signal corresponding to the amount of the residual data for each macroblock to the quantizing circuit 57. The transmission buffer memory 59 thus regulates the amount of data sent out in a bit stream to hold an appropriate amount of data (amount of data that will not cause overflow or underflow) therein.

For example, upon the decrease of the amount of the residual data held in the transmission buffer memory 59 to an upper limit, the transmission buffer memory 59 provides a quantization control signal to increase the quantizing scale to be used by the quantizing circuit 57 so that the amount of quantized data quantized by the quantizing circuit 57 will be decreased. Upon the decrease of the amount of the residual data held in the transmission buffer memory 59 to a lower limit, the transmission buffer memory 59 provides a quantization control signal to decrease the quantizing scale to be used by the quantizing circuit 57 so that the amount of quantized data quantized by the quantizing circuit 57 will be increased.

The output bit stream of the transmission buffer memory 59 is combined with a coded audio signal, synchronizing signals and the like to produce a multiplex signal, an error correction code is added to the multiplex signal, the multiplex signal is subjected to predetermined modulation, and then the modulated multiplex signal is recorded in pits on a master disk with a laser beam controlled according to the modulated multiplex signal. A stamping disk for duplicating the master disk is formed by using the master disk to mass-produce recording media 8, such as optical disks.

The data of the I picture provided by the quantizing circuit 57 is inversely quantized by an inverse quantizing circuit 60 at a step provided by the quantizing circuit 57. The output of the inverse quantizing circuit 60 is subjected to IDCT (inverse DCT) in an IDCT circuit 61, and the output of the IDCT circuit 61 is given to the converting circuit 65. The converting circuit 65 converts the input data from the IDCT circuit 61 according to a DCT flag provided by the DCT mode switching circuit 55 and a prediction flag provided by the prediction mode switching circuit 52 into data of frame prediction mode (Fig. 36(A)) or data of field prediction mode (Fig. 36(B)) so that the converted data matches the predicted image data provided by the motion compensating circuit 64, and then converted data is given to an arithmetic unit 62. Data provided by the arithmetic unit 62 is converted into data of frame prediction mode (Fig. 36(A)) according to the prediction flag by a conversion circuit 66, and then the converted data is stored in the forward predicted image area 63a of a frame memory 63.

The frame memory 63 may be substituted by a field memory. When a field memory is used instead of the frame memory 63, the output data of the arithmetic unit 62 is converted into data of field prediction mode (Fig. 36(B)) by the converting circuit 66, because data of fields are stored individually.

When processing sequential input image data of frames as, for example, I, B, P, B, P, B ... pictures, the motion vector detecting circuit 50 processes the image data of the first input frame as an I picture, and then processes the image data of the third input frame as a P picture before processing the image data of the second input frame as a B picture, because the B picture requires backward prediction and the B picture cannot be decoded without using the P picture, i.e., a backward predicted image.

After processing the I picture, the motion vector detecting circuit 50 starts processing the image data of the P picture stored in the backward original image area 51c and, as mentioned above, the motion vector detecting circuit 50 gives the sum of absolute values of the interframe differences (prediction errors) in each macroblock to the prediction mode switching circuit 52 and the prediction mode selecting circuit 54. The prediction mode switching circuit 52 and the prediction mode selecting circuit 54 set a frame/field prediction mode or a prediction mode (block type) for intraimage prediction, forward prediction, backward prediction or bilateral prediction according to the sum of absolute values of prediction errors in the macroblock of the P picture.

When the interframe prediction mode is sct, the movable contact 53d of the arithmetic unit 53 is connected to the fixed contact a. Consequently, the data, similarly to the data of the I picture, is provided through the DCT mode switching circuit 55, the DCT circuit 56, the quantizing circuit 57, the variable-length coding circuit 58 and the transmitting buffer memory 59 on a transmission line. The data is also sent through the inverse quantizing circuit 60, the IDCT circuit 61, the converting circuit 65, the arithmetic unit 62 and the converting circuit 66 to the backward predicted image area 63b of the frame memory 63 for storage.

When the forward prediction mode is set, the movable contact 53d of the arithmetic unit 53 is connected to the fixed contact b, and the motion compensating circuit 64 reads the data of the I picture from the forward predicted image area 63a of the frame memory 63 and execute motion compensation according to a motion vector provided by the motion vector detecting circuit 50.

When the prediction mode selecting circuit 54 selects the forward prediction mode, the motion compensating circuit 64 shifts the read address at a position corresponding to the macroblock being provided by the motion vector detecting circuit 50 in the forward predicted image area 63a according to the motion vector, reads the data from the forward predicted image area 63a and produces a predicted image data. The motion compensating circuit 64 arranges the predicted image data in the arrangement shown in Fig. 36 according to a frame/field prediction flag provided by the prediction mode switching circuit52.

The predicted image data provided by the motion compensating circuit 64 is given to an arithmetic unit 53a. The arithmetic unit 53a subtracts the predicted image data of a macroblock given thereto by the motion compensating circuit 64 from the data of the corresponding macroblock of a reference original image provided by the prediction mode switching circuit 52, and provides difference data representing the difference between those image data (prediction error) through the DCT mode switching circuit 55, the DCT circuit56, the quantizing circuit 57, the variable-length coding circuit 58 and the transmitting buffer memory 59 on the transmission line. The difference data is locally decoded by the inverse quantizing circuit 60, the IDCT circuit 61 and the converting circuit 65, and the locally decoded difference data is given to the arithmetic unit 62.

The predicted image data given to the arithmetic unit 53a is given also to the arithmetic unit 62. The arithmetic unit 62 adds the predicted image data provided by the motion compensating circuit 64 to the difference data provided by the converting circuit 65 to obtain the image data of the original (decoded) P picture. Since the image data of the original P picture is arranged in the arrangement shown in Fig. 36 by the prediction mode switching circuit 52, a converting circuit 66 rearranges the image data in the arrangement for frame prediction as shown in Fig. 36(A) (or in the arrangement for field prediction mode shown in Fig. 36(B) when the frame memory 63 is a field memory) according to the prediction flag. The image data of the P picture is stored in the backward predicted image area 63b of the frame memory 63.

After the image data of the I picture and that of the P picture have been thus stored respectively in the forward predicted image area 63a and the backward predicted image area 63b, the motion vector detecting circuit 50 executes the process for processing the B picture. The prediction mode switching circuit 52 and the prediction mode selecting circuit 54 sets either the frame prediction mode or the field prediction mode according to the sum of absolute values of the interframe differences for each macroblock, and sets the intraframe prediction mode, the forward prediction mode, the backward prediction mode or the bilateral prediction mode.

As mentioned above, when the intraframe prediction mode or the forward prediction mode is set, the movable contact 53d is connected to the fixed contact b, and then the same process as that for the P picture is carried out and data is transmitted.

When the backward prediction mode or the bilateral prediction mode is set, the movable contact 53d is connected to the fixed contact c or d.

When the movable contact 53d is connected to the fixed contact c for the backward prediction mode, the image data (the image data of the P picture in this state) is read from the backward predicted image area 63b, and the image data is processed for motion compensation by the motion compensating circuit 64 according to a motion vector provided by the motion hector detecting circuit 50. When the backward prediction mode is set by the prediction mode selecting circuit 54, the motion compensating circuit 64 shifts the read address in the backward predicted image area 63b from a position corresponding to the position of a macroblock being provided by the motion vector detecting circuit 50 according to the motion vector, reads the data, produces predicted image data, and rearranges the data in an arrangement shown in Fig. 36 according to a prediction flag provided by the prediction mode switching circuit 52.

The motion compensating circuit 64 gives the predicted image data to an arithmetic unit 53b. The arithmetic unit 53b subtracts the predicted image data provided by the motion compensating circuit 64 from the data of the macroblock of the reference original image provided by the prediction mode switching circuit 52 to obtain difference data representing the differences between the image data. The difference data is provided through the DCT mode switching circuit 55, the DCT circuit 56, the quantizing circuit 57, the variable-length coding circuit 58 and the transmitting buffer memory 59 on the transmission line.

When the movable contact 53d is connected to the fixed contact d to set the bilateral prediction mode, the image data (image data of the I picture in this state) is read from the forward predicted image area 63a and the image data (image data of the P picture in this state) is read from the backward predicted image area 63b, and then both the image data are processed for motion compensation by the motion compensating circuit 64 according to the motion vector provided by the motion vector detecting circuit 50. When the prediction mode selecting circuit 54 sets the bilateral prediction mode, the motion compensating circuit 64 shifts the read addresses in the forward predicted image area 63a and the backward predicted image area 63b from positions corresponding to the position of the macroblock being provided by the motion vector detecting circuit 50 according to two motion vectors for the forward predicted image and the backward predicted image, respectively, reads data from the forward predicted image area 63a and the backward predicted image area 63b, and produces predicted image data. The predicted image data is rearranged according to a prediction flag provided by the prediction mode switching circuit 52.

The motion compensating circuit 64 gives the predicted image data to an arithmetic unit 53c. The arithmetic unit 53c subtracts the mean of the predicted image data provided by the motion compensating circuit 64 from the data of the macroblock of the reference original image provided by the motion vector detecting circuit 50 to provide difference data through the DCT mode switching circuit 55, the DCT circuit 56, the quantizing circuit 57, the variable-length coding circuit 58 and the transmitting buffer memory 59 on the transmission line.

The image of the B picture is not stored in the frame memory 63 because the same is not used as a predicted image for other images.

When necessary, the banks of the forward predicted image area 63a and the backward predicted image area 63b of the frame memory 63 can be changed to provide the forward predicted image or the backward predicted image stored in either the forward predicted image area 63a or the backward predicted image area 63b as a forward predicted image or a backward predicted image for a specified reference original image.

Although the encoder 7 has been explained as applied mainly to processing the luminance blocks, the macroblocks of the color difference blocks shown in Figs. 36 and 37 can be similarly processed and transmitted. A motion vector for processing the color difference block is half the motion vector of the corresponding luminance block with respect to the vertical direction and the horizontal direction.

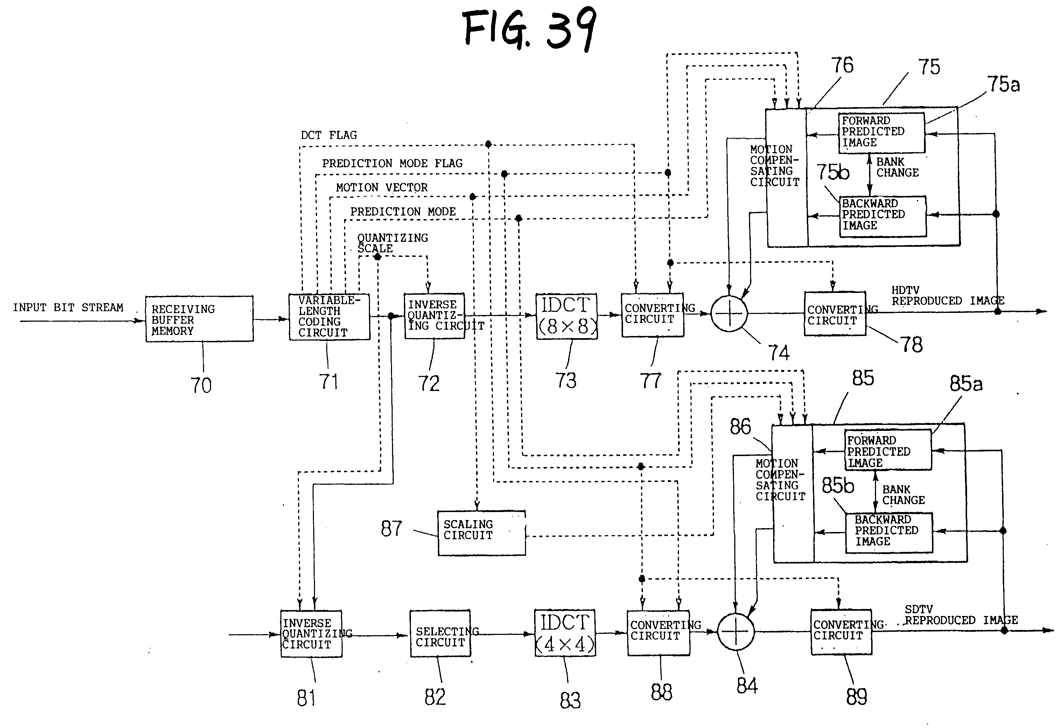

The decoder 9 will be described hereinafter with reference to Fig. 39. An input bit stream representing image data stored in the recording medium 8 (Fig. 27), such as an optical disk, is given to the decoder 9. The input bit stream is transmitted through a receiving buffer memory 70 to a variable-length decoding circuit (IVLC) 71 for decoding to obtain quantized data (DCT coefficients), motion vectors, a prediction flag, a DCT flag and a quantization scale. The data (DCT coefficients) provided by the variable-length decoding circuit 71 is inversely quantized by an inverse quantizing circuit 72 to provide representatives. The step of inverse quantization is regulated according to the quantization scale provided by the variable-length decoding circuit 71.

For each block, 8*8 quantized reproduced values (DCT coefficients) are provided by the inverse quantizing circuit 72. An IDCT circuit 73 processes the 8*8 coefficients for IDCT to obtain a block having 8*8 pixels data. The output of the IDCT circuit 73 is rearranged according to a DCT flag and a prediction flag provided by the variable-length decoding circuit 71 by a converting circuit 77 in an arrangement coinciding with the arrangement of data provided by a motion compensating circuit 76. The output of the converting circuit 77 is given to an arithmetic unit 74.

When image data representing an I picture is given to an arithmetic unit 74, the arithmetic unit 74 gives the image data to a converting circuit 78, which in turn rearranges the image data according to a prediction flag provided by the variable-length decoding circuit 71 in an arrangement for frame prediction mode shown in Fig. 36(A) (for field prediction mode shown in Fig. 36(B) when a field memory is used instead of a frame memory 75) and stores the image data in the forward predicted image area 75a of the frame memory 75 to use the same for producing a predicted image data of the next image data given to the arithmetic unit 74. The image data is given also to a format conversion circuit 10 (Fig. 27).

When image data for forward prediction representing a P picture using the image data of the preceding frame as predicted image data is given to the arithmetic unit 74, the image data representing the preceding frame (image data of an I picture) is read from the forward predicted image area 75a of the frame memory 75, the image data is subjected to motion compensation in a motion compensating circuit 76 according to a motion vector provided by the variable-length decoding circuit 71, processed according to the prediction mode (block type) and the image data is rearranged as shown in Fig. 36 according to the prediction flag. The arithmetic unit 74 adds the rearranged data and image data (difference data) provided by the converting circuit 77. The added data, i.e., the decoded image data of the P picture, is stored in the backward predicted image area 75b of the frame memory 75 for producing predicted image data of the next image data given to the arithmetic unit 74 (image data of a B or P picture).

When the image data representing a P picture is the data for the intraimage prediction mode, the image data, similarly to that of the I picture, is not processed by the arithmetic unit 74 and is stored in the backward predicted image area 75b as it is.

Since the P picture is to be displayed next to the next B picture, the image data representing the P picture is not given to the format converting circuit 10 at this time, because, as mentioned above, the P picture entered after the B picture is processed and transmitted before the B picture.

When the image data representing the B picture is provided by the converting circuit 77, either the image data of the 1 picture stored in the forward predicted image area 75a of the frame memory 75 (in the forward prediction mode) or the image data of the P picture stored in the backward predicted image area 75b (in the backward prediction mode) is read or both the image data (in the bilateral prediction mode) are read according to a signal representing the prediction mode provided by the variable-length decoding circuit 71, the read image data is processed for motion compensation by the motion compensating circuit 76 according to a motion vector provided by the variable-length decoding circuit 71, the motion-compensated image data is rearranged according to the prediction flag to produce a predicted image. When motion compensation is unnecessary (intraimage prediction mode), any predicted image is not produced.

The arithmetic unit 74 adds the output of the converting circuit 77 and the image data motion-compensated by the motion compensating circuit 76, and the sum of addition is given to the format converting circuit 10 after being restored to a state for the frame prediction mode according to the prediction flag by the converting circuit 78.

Since the sum of addition is the image data of the B picture and is not used for producing the predicted image of other images, the sum of addition is not stored in the frame memory 75.

After the image of the B picture has been provided, the image data of the P picture is read from the backward predicted image area 75b and provided through the motion compensating circuit 76, the arithmetic unit 74 and the converting circuit 78. This image data is not processed for motion compensation and rearrangement.

The color difference signals can be processed similarly to the luminance signal. then processing the color difference signals, a motion vector half the motion vector used for processing the luminance signal with respect to the vertical direction and the horizontal direction is used.

The image thus reproduced is subjected to D/A conversion to obtain a decoded image for high-resolution HDTV.

The decoder 9 shown in Fig. 39 is provided with a configuration comprising an inverse quantizing circuit 81, a converting circuit 89 and the associated circuits for obtaining a decoded image of a quarter-resolution image (image for standard TV) in addition to the configuration for obtaining the decoded image for HDTV. The inverse quantizing circuit 81 obtains representatives by the inverse quantization of the data provided by the variable-length decoding circuit 71 according to a quantizing scale provided by the variable-length decoding circuit 71 and gives the representatives to a selecting circuit 82. The decoder 9 is provided with the inverse quantizing circuit 81 to provide both a StanDard TV image (SDTV image) and a HDTV image. The inverse quantizing circuit 81 may be omitted when only one of the SDTV image or the HDTV image is necessary. When the inverse quantizing circuit 81 is omitted, the output of the inverse quantizing circuit 72 is given to the selecting circuit 82,

The selecting circuit 82 selects the 4∗4 DCT coefficients shown in Fig. 34 among the 8∗8 DCT coefficients shown in Fig. 33 to obtain the DCT coefficients of 4∗4 pixels data of quarter-resolution by half thinning out the 8∗8 pixels data with respect to the vertical direction and the horizontal direction.

An IDCT circuit 83 processes the input 4∗4 DCT coefficients for IDCT and gives data to the converting circuit 88. The converting circuit 88 rearranges the data according to a DCT flag and a prediction flag provided by a motion compensating circuit 86 so that the arrangement of the data coincide with the arrangement of the predicted image provided by a motion compensating circuit 86.

The data rearranged by the converting circuit 88 is given to a arithmetic unit 84. The motion compensating circuit 86 changes the banks of a frame memory 85 and motion-compensate the data stored in the frame memory 85 according to a prediction mode and a motion vector provided by the variable-length decoding circuit 71, and rearranges the image data according to the prediction flag as shown in Fig. 36 to produce a predicted image data.

The data provided by the motion compensating circuit 86 is added to the output of the converting circuit 88. The data is rearranged in an arrangement for frame prediction mode (field prediction mode when a field memory is used instead of the frame memory 85) according to the prediction flag by the converting circuit 89 to provide a standard TV image data. Since the motion in the motion compensating circuit 86 is about half the motion in the motion compensating circuit 76, the motion vector provided by the variable-length decoding circuit 71 is reduced by half by a scaling circuit 87 and the reduced motion vector is given to the motion compensating circuit 86.

When the prediction mode selecting circuit 54 of the encoder 7 (Fig. 35) selects the frame prediction mode for the encoder 7, the decoder 9 is set also for the frame prediction mode. When the field prediction mode is selected for the encoder 7, the decoder 9 is set for the field prediction mode. Thus, when the motion compensating circuit 64 of the encoder 7 (the motion compensating circuit 76 of the decoder 9) produces a predicted image in the frame prediction mode, the motion compensating circuit 86 of the decoder 9 produces a predicted image in the frame prediction mode in cooperation with the scaling circuit 87 and, when the motion compensating circuit 64 (the motion compensating circuit 76) produces a predicted image in the field prediction mode, the motion compensating circuit 86 produces a predicted image in the field prediction mode in cooperation with the scaling circuit 87.

The foregoing conventional image signal decoder uses the motion vector obtained simply by reducing the motion vector for decoding high-resolution image data by the scaling circuit 87 for motion compensation when producing a low-resolution image. Accordingly, the data of the block as the predicted image produced by the motion compensating circuit 86 does not coincide exactly with the data of the block obtained by the DCT of the data motion-compensated by the motion compensating circuit 64 of the encoder 7 (the motion compensating circuit 76 of the decoder 9), extracting the low-frequency components of the output of the motion compensating circuit 64 and subjecting the low-frequency components to IDCT. Therefore, a drift (a mismatching error) is produced between the data produced by the motion compensating circuit 86 and the data obtained by the encoder 7 and, consequently, the data obtained by processing the data provided by the motion compensating circuit 86 by the arithmetic unit 84, i.e., the quarter-resolution SDTV image data, does not coincide exactly with the original HDTV image data.

The quarter-resolution SDTV image data can be obtained by adding the 4∗4 data produced by extracting the low-frequency components of the output of the quantizing circuit 57 of the encoder 7, i.e., the 4∗4 pixels data in the upper left-hand corner among the 8∗8 pixels data, subjecting the extracted 4∗4 data to inverse quantization and subjecting the inversely quantized 4∗4 data to IDCT and the 4∗4 data produced by subjecting the 8∗8 pixels data provided by the motion compensating circuit 64 to DCT, extracting the low-frequency components, i.e., the 4∗4 data, from the 8∗8 pixels data processed for DCT and subjecting the low-frequency components to IDCT. However, the quarter-resolution SDTV image data obtained by the decoder shown in Fig. 39 does not correspond exactly to the SDTV image data obtained by the encoder 7 by decoding. Therefore, if the period of arrival of intrapictures is extended, the interval between the successive mismatching error resetting operations is increased, the mismatching errors are accumulated in the frame memory 85, and the drift appears on the screen as noise to spoil the quality of the picture.

The present invention has been made in view of the foregoing problems and is intended to reduce mismatching errors.

Various aspects of the invention are set out in the appended claims.

An image signal coding method in accordance an example of with the present invention that subjects a difference image signal representing the difference of input image data from predicted image data to transformation or blocking to produce predetermined coefficient data, and codes the predetermined coefficient data comprises steps of producing first data by the inverse transformation or reconstruction of the coefficient data, extracting a predetermined portion of the coefficient data, producing second data by the inverse transformation or reconstruction of the coefficient data included in the predetermined portion, producing third data by extracting data corresponding to the predetermined portion from the first data and subjecting the extracted data to inverse transformation or reconstruction, and calculating the difference between the second data and the third data, and coding the difference.

This method codes the difference data representing the difference between the second and third data and transmits the coded difference data. Mismatching errors can be corrected on the basis of the difference data.

Exemplary embodiments of the invention will be described hereinafter, by way of example only, with reference to the accompanying drawings. in which:

Fig. 1 is a block diagram showing the fundamental configuration of an image signal encoder in accordance with the present invention.

Fig. 2 is a block diagram showing the fundamental configuration of an image signal decoder in accordance with the present invention.

Fig. 3 is a block diagram of an image signal encoder in a first embodiment according to the present invention.

Fig. 4 is a block diagram of an image signal decoder in a first embodiment according to the present invention.

Fig. 5 is a block diagram of an image signal encoder in a second embodiment according to the present invention.

Fig. 6 is a block diagram of an image signal decoder in a second embodiment according to the present invention.

Fig. 7 is a block diagram of an image signal encoder in a third embodiment according to the present invention.

Fig. 8 is a block diagram of an image signal decoder in a third embodiment according to the present invention.

Fig. 9 is a block diagram of an image signal encoder in a fourth embodiment according to the present invention.

Fig. 10 is a block diagram of an image signal decoder in a fourth embodiment according to the present invention.

Fig. 11 is a block diagram of an image signal encoder in a fifth embodiment according to the present invention.

Fig. 12 is a diagram of assistance in explaining a motion compensating operation.

Fig. 13 is a diagram of assistance in explaining a motion compensating operation to be carried out by motion compensating circuits 76 and 86 included in the image signal encoder of Fig. 11 in a frame prediction mode.

Fig. 14 is a diagram of assistance in explaining another motion compensating operation to be carried out by the motion compensating circuit 76 and 86 included in the image signal encoder of Fig. 11 in the frame prediction mode.

Fig. 15 is a diagram of assistance in explaining a further motion compensating operation to be carried out by the motion compensating circuits 76 and 86 included in the image signal encoder of Fig. 11 in the frame prediction mode.

Fig. 16 is a diagram of assistance in explaining a motion compensating operation to be carried out by the motion compensating circuits 76 and 86 included in the image signal encoder of Fig. 11 in a field prediction mode.

Fig. 17 is a block diagram of an image signal encoder in a sixth embodiment according to the present invention.

Fig. 18 is a diagrammatic view of assistance in explaining the operation of a selecting circuit 82 included in the image signal encoder of Fig. 17.

Fig. 19 is a block diagram of an image signal encoder in a seventh embodiment according to the present invention.

Fig. 20 is block diagram of an image signal decoder in a seventh embodiment according to the present invention.

Fig. 21 is a block diagram of an image signal encoder in an eighth embodiment according to the present invention.

Fig. 22 is a block diagram of an image signal decoder in an eighth embodiment according to the present invention.

Fig. 23 is a block diagram of an image signal encoder in a ninth embodiment according to the present invention.

Fig. 24 is a block diagram of an image signal decoder in a ninth embodiment according to the present invention.

Fig. 25 is a block diagram of a method of fabricating an image signal recording medium embodying the present invention.

Fig. 26 is a block diagram of a method of producing software in accordance with the present invention.

Fig. 27 is a block diagram of a conventional image signal encoder and a conventional image signal decoder.

Fig. 28 is a pictorial view of assistance in explaining a principle of data compression.

Fig. 29 is a pictorial view of assistance in explaining types of pictures to be used for image data compression.

Fig. 30 is a diagram of assistance in explaining a principle of moving picture signal encoding.

Fig. 31 is a diagrammatic view of assistance in explaining an image data transmitting format.

Fig. 32 is a block diagram of a portion of a decoder 9 included in the image signal decoder of Fig. 27.

Fig. 33 is a table of data to be extracted by an extracting circuit 21 included in the decoder 9 of Fig. 32.

Fig. 34 is a table of data to be extracted by an extracting circuit 22 included in the decoder 9 of Fig. 32.

Fig. 35 is a block diagram of an encoder 7 included in the image signal encoder of Fig. 27.

Fig. 36 is a diagrammatic view of assistance in explaining the operation of a prediction mode switching circuit 52 included in the encoder of Fig. 35.

Fig. 37 is a diagrammatic view of assistance in explaining the operation of a DCT mode switching circuit 55 included in the encoder of Fig. 35.

Fig. 38 is a table of assistance in explaining zigzag scanning.

Fig. 39 is a block diagram of the decoder 9 of Fig. 9.

An image signal encoder and an image signal decoder embodying the present invention will be described hereinafter. Basically, the image signal encoder and the image signal decoder embodying the present invention are the same in configuration as the conventional image signal encoder and the conventional image signal decoder shown in Fig. 27, except that the image signal encoder and the image signal decoder embodying the present invention are provided respectively with an encoder 7 and a decoder 9 which are different from those of the conventional image signal encoder and the conventional image signal decoder. Accordingly, the encoder and the decoder employed in the present invention will be described herein, in which parts like or corresponding to those of the conventional encoder shown in Fig. 35 and the conventional decoder shown in Fig. 39 are denoted by the same reference characters and the description thereof will be omitted at discretion.

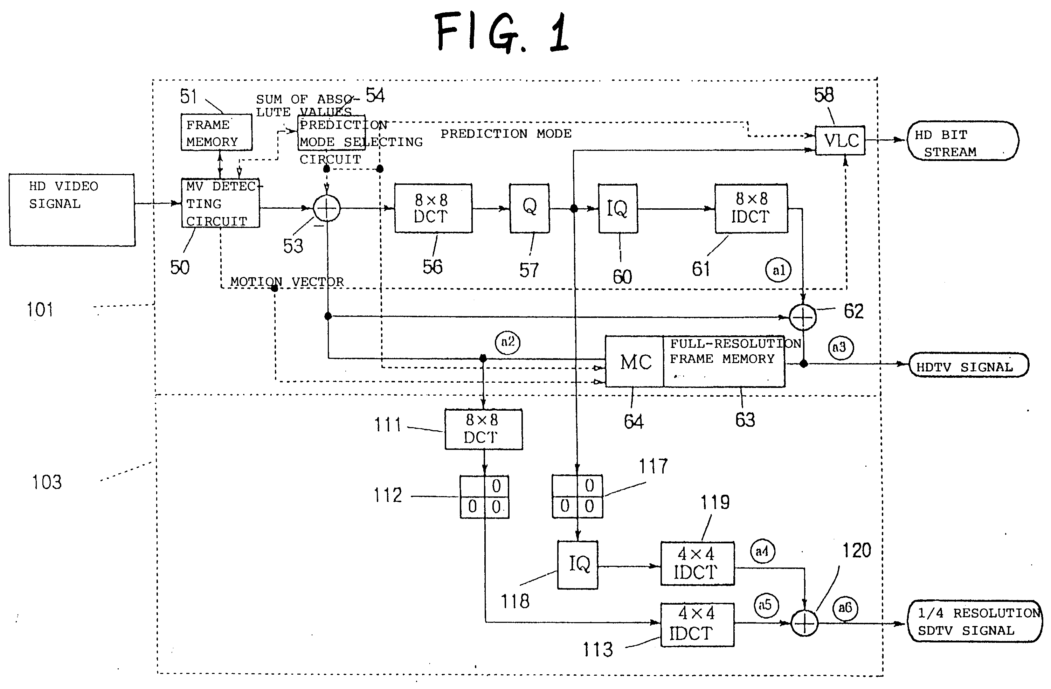

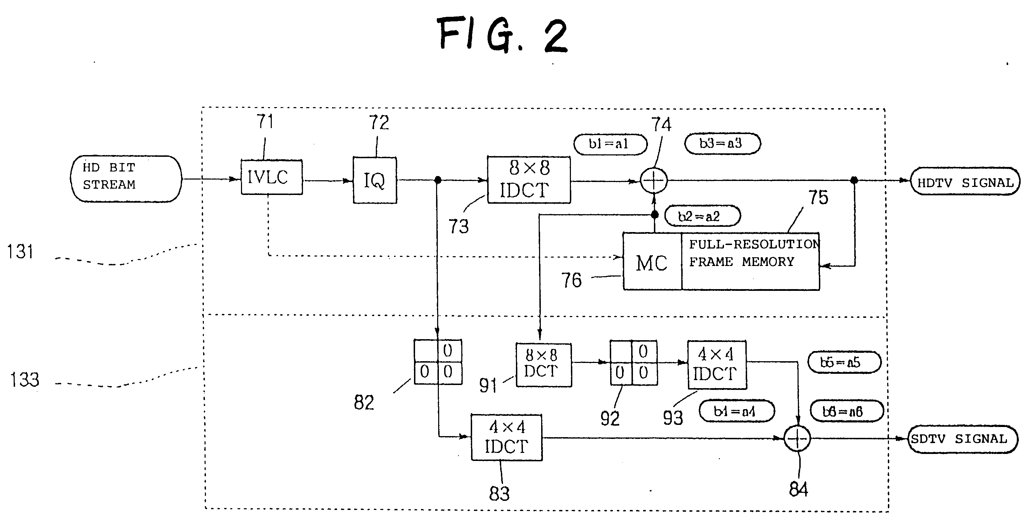

First, the fundamental configurations of the encoder and the decoder employed in the present invention will be described with reference to Figs. 1 and 2. Referring to Fig. 1, the encoder 7 comprises a full-resolution encoding unit 101 and a quarter-resolution image forming unit 103. Basically, the full-resolution encoding unit 101 is the same in configuration as the encoder 7 shown in Fig. 35, except that the full-resolution encoding unit 101 is not provided with the prediction mode switching circuit 52 and the DCT mode switching circuit 55. Therefore, the full-resolution encoding unit 101 need not be provided with the converting circuits 65 and 66 (Fig. 35).

When a high-resolution HDTV signal, typically, a high-definition television signal, is applied to a motion vector (MV) detecting circuit 50, a variable-length coding circuit (VLC) 58 provides a HD bit stream obtained by coding the high-resolution HDTV signal. A HDTV local video signal a4 produced by locally decoding the high-resolution HDTV signal can be obtained from an output a3 of an arithmetic unit 62 produced by adding an output a1 of an IDCT circuit 61 and an output a2 of a motion compensating circuit (MC) 64.

The quarter-resolution image forming unit 103 has a DCT circuit 111 to process the 8*8 pixel data a2 provided by the motion compensating circuit 64 for DCT. A selecting circuit 112 selects 4*4 DCT coefficients in the upper left-hand corner among 8*8 DCT coefficients provided by the DCT circuit 111, removes the rest of the DCT coefficients and gives the selected 4*4 DCT coefficients to an IDCT circuit 113. Thus, the DCT coefficients corresponding to 4*4 pixel data (predicted image data) produced by half thinning out 8*8 pixel data with respect to the vertical direction and the horizontal direction can be obtained. The IDCT circuit 113 processes the input 4*4 DCT coefficients for IDCT to give 4*4 pixel data a5 as predicted image data to an arithmetic unit 120.

The output of a quantizing circuit 57 included in the full-resolution encoding unit 101 is given to a selecting circuit 117 included in the quarter-resolution image forming unit 103. The selecting circuit 117 extracts the 4*4 pixel data (low-frequency components) in the upper left-hand portion among 8*8 pixel data to produce the 4*4 pixel data (difference data) by half thinning out the 8*8 pixel data with respect to the vertical direction and the horizontal direction. The 4*4 pixel data is processed for inverse quantization by an inverse quantizing (IQ) circuit 118 to obtain representatives, the representatives are processed for IDCT by an IDCT circuit 119 to obtain 4*4 pixel data a4 (difference data). The arithmetic unit 120 adds the 4*4 pixel data a4 and the output (predicted image data) a5 of the IDCT circuit 113 to produce data a6, which is quarter-resolution standard TV (SDTV) signals (decoded signals).

Fig. 2 shows the fundamental configuration of the decoder which decodes the HD bit stream provided by the encoder shown in Fig. 1 to obtain high-resolution HDTV signals and quarter-resolution SDTV signals.

The decoder comprises a full-resolution decoding unit 131 and a quarter-resolution image decoding unit 133. Basically, the full-resolution decoding unit 131 is the same as the configuration of the decoder 9 shown in Fig. 39 for decoding high-resolution HDTV signals, except that the decoder shown in Fig. 2 is not provided with the converting circuits 77 and 78.

An IDCT circuit 73 included in the full-resolution decoding unit 131 provides difference block data b1, i.e., 8*8 pixel data, which are the same as the difference block data a1, i.e., the 8*8 pixel data, provided by the IDCT circuit 61 of the full-resolution encoding unit 101. A motion compensating circuit 76 provides 8∗8 pixel data b2 of a predicted image, which are the same as the 8∗8 pixel data a2 provided by the motion compensating circuit 64 of the full-resolution encoding unit 101 shown in Fig. 1. Accordingly, the decoded data a3 obtained by adding the difference data b1 and the predicted image data b2 by the arithmetic unit 74 is the same as the decoded data a3 provided by the arithmetic unit 62 of the full-resolution image encoding unit 101 shown in Fig. 1; that is, the decoded data b3 represents HDTV signals.

A selecting circuit 82 included in the quarter-resolution image decoding unit 133 selects the 4∗4 difference data (low-frequency components) included in the upper left-hand portion among the 8∗8 difference data provided by the inverse quantizing circuit 72 of the full-resolution decoding unit 131 and gives the same to an IDCT circuit 83. Thus, 4∗4 DCT coefficients corresponding to the 4∗4 pixel data (difference data) produced by half thinning out the 8∗8 pixel data with respect to the vertical direction and the horizontal direction are obtained. The IDCT circuit 83 processes the 4∗4 pixel data for IDCT to give 4∗4 difference pixel data b4 to an arithmetic unit 84.

A DCT circuit 91 included in the quarter-resolution image decoding unit 133 processes the 8∗8 predicted image data provided by the motion compensating circuit 76 for DCT to obtain 8∗8 DCT coefficients. A selecting circuit 92 selects 4∗4 DCT coefficients included in the uportion (low-frequency components) among the 8∗8 DCT coefficients provided by the DCT circuit 91 and gives the selected DCT coefficients to an IDCT circuit 93. Thus, 4∗4 DCT coefficients corresponding to the 4∗4 pixel data (predicted image data) produced by half thinning out the 8∗8 pixel data with respect to the vertical direction and the horizontal direction can be obtained. The IDCT circuit 93 processes the 4∗4 DCT coefficients for IDCT to give 4∗4 predicted image data b5 to the arithmetic unit 84.

The difference data b4 provided by the IDCT circuit 83 is the same as the difference data a4 provided by the IDCT circuit 119 of the encoder shown in Fig. 1, and the predicted image data b5 provided by the IDCT circuit 93 is the same as the predicted image data a5 provided by the IDCT circuit 113 of the encoder shown in Fig. 1, consequently, decoded data b6 obtained by adding the data b4 and b5 by the arithmetic unit 84 is the same as the decoded data a6 provided by the arithmetic unit 120 of the encoder shown in Fig. 1. Therefore, the quarter-resolution SDTV signals provided by the arithmetic unit 84 does not contain any mismatching errors.

However, the decoder having the configuration as shown in Fig. 2 needs the full-resolution decoding unit 131 to decode the HDTV signals even when decoded HDTV signals are unnecessary, which makes the circuit configuration complex, increases the scale of the image signal coder and the image signal decoder and increases the cost of the same. A decoder in a preferred embodiment is a compact, low-cost decoder capable of decoding only the quarter-resolution SDTV signals and, when necessary, of decoding high-resolution HDTV signals.

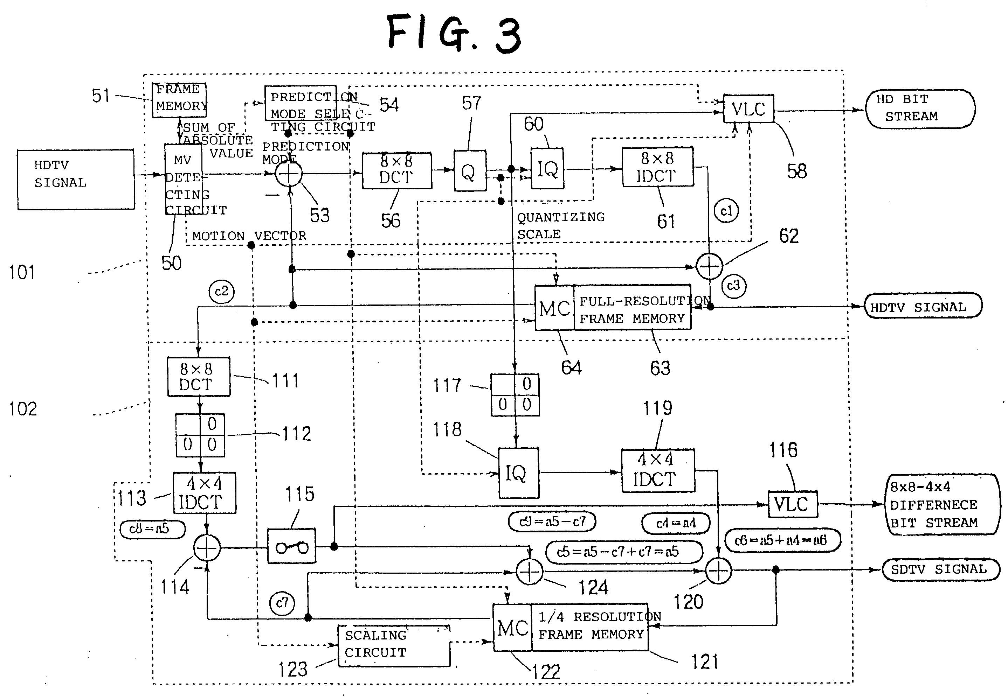

Referring to Fig. 3, the encoder embodying the present invention comprises a full-resolution encoding unit 101 and a quarter-resolution mismatching error correcting encoding unit 102. The full-resolution encoding unit 101 is the same in configuration as the full-resolution encoding unit 101 shown in Fig. 1. Accordingly, the respective output data c1, c2 and c3 of an IDCT circuit 61, a motion compensating circuit 64 and an arithmetic unit 62 included in the full-resolution encoding unit 101 of the encoder shown in Fig. 3 are equal respectively to the respective output data al, a2 and a3 of the IDCT circuit 61, the motion compensating circuit 64 and the arithmetic unit 62 of the full-resolution encoding unit 101 of the encoder shown in Fig. 1.

The quarter-resolution mismatching error correcting encoding unit 103 comprises, similarly to the quarter-resolution image forming unit 103 of the encoder shown in Fig. 1, a DCT circuit 111, a selecting circuit 112, an IDCT circuit 113, a selecting circuit 117, an inverse quantizing circuit 118, an IDCT circuit 119 and an arithmetic unit 120. The output data c8 of the IDCT circuit 113 is equal to the output data a5 of the IDCT circuit 113 of the encoder shown in Fig. 1, and the output data c4 of the IDCT circuit 119 is equal to the output data a4 of the IDCT circuit 119 of the encoder shown in Fig. 1.

This embodiment is provided with a quarter-resolution frame memory 121 to store the output data of the arithmetic unit 120. A motion compensating circuit 122 processes the data stored in the quarter-resolution frame memory 121 for motion compensation and the output of the motion compensating circuit 122 is given to an arithmetic units 114 and 124. The arithmetic unit 114 subtracts predicted image data c7 provided by the motion compensating circuit 122 from predicted image data c8 provided by the IDCT circuit 113 to obtain difference data c9 (mismatching error data) representing the differences between 4∗4 predicted image data included in a predetermined portion of the predicted image data produced from a high-resolution (full-resolution) data stored in a full-resolution frame memory 63 and 4∗4 predicted image data produced by processing quarter-resolution data stored in a quarter-resolution frame memory, i.e., quarter-resolution data decoded by using a motion vector provided by a scaling circuit 123.

The data c9 (= c8 - c7 = a5 - c7) is transferred through a switch 115 to a variable-length coding circuit 116, and the coded data c9, i.e., a difference bit stream (8∗8 - 4∗4) is transmitted to the decoder. The data c9 is given also to an arithmetic unit 124. The arithmetic unit 124 adds the predicted image data c7 provided by the motion compensating circuit 122 and the mismatching error data c9 to give data c5 (= c7 + c9 = c7 + a5 - c7 = a5) to the arithmetic unit 120. The data c5 is equal to the output data c5 of the IDCT circuit 113.

The arithmetic unit 120 adds the output predicted image data c5 (= a5) of the arithmetic unit 124 and the output difference data c4 (= a4) of the IDCT circuit 119 to produce quarter-resolution locally decoded data c6 (= c4 + c5 = a4 + a5 = a6). The data c6 is stored in the quarter-resolution frame memory 121.

The scaling circuit 123 scales down a motion vector provided by a motion vector detecting circuit 50 by half with respect to both the vertical direction and the horizontal direction and gives the scaled-down motion vector to the motion compensating circuit 122 for use for motion compensation when producing the predicted image data c7.

Although the output data c5 (= a5) of the arithmetic unit 124 is given to the arithmetic unit 120 in the encoder shown in Fig. 3, the output data c8 (= a5) of the IDCT circuit 113 may be given to the arithmetic unit 120. In the latter case, the arithmetic unit 124 may be omitted.

The switch 115 controls the amount of information represented by the mismatching error data c9 to be transmitted. Although an image having less errors can be decoded and a picture of higher quality can be formed when all the mismatching error data c9 is transmitted to the decoder, the transmission of all the mismatching error data c9 is incompatible with the efficient use of the transmission line. Therefore, the switch 115 is closed and opened properly to control the amount of the mismatching error data c9 to be transmitted.

For example, when transmitting P pictures, the switch 115 is closed every N P pictures. When N is increased, the amount of transmitted information decreases accordingly. However, if N is excessively large, any difference bit stream is not virtually transmitted and drift is liable to appear on the screen. When N is reduced, the mismatching error can be reset every time the switch 115 is closed and drift can be suppressed. However, transmission efficiency is reduced as the N is reduced. The value of N is determined properly from the practical point of view.

The switch 115 is opened when transmitting B pictures because mismatching errors are produced scarcely in B pictures. Since motion compensation is not performed when transmitting I pictures, the operation of the switch 115 is ignored.

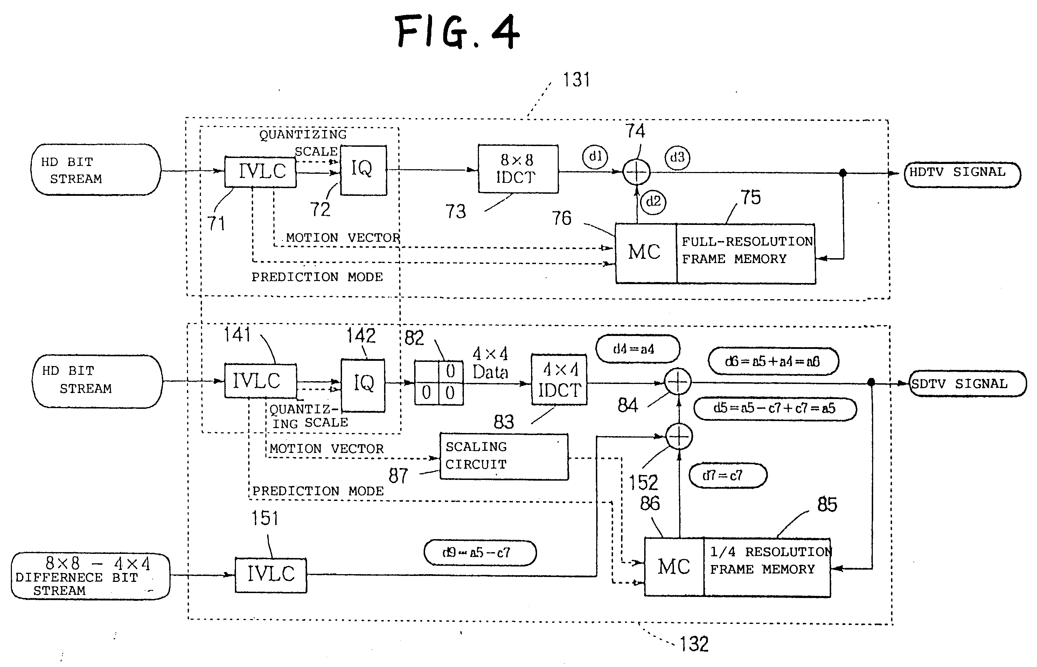

Fig. 4 shows a decoder embodying the present invention for decoding a HD bit stream and a difference bit stream encoded and transmitted by the encoder shown in Fig. 3. The decoder comprises a full-resolution decoding unit 131 and a quarter-resolution mismatching error correcting decoding unit 132. The configuration of the full-resolution decoding unit 131 is the same as that f the full-resolution decoding unit 131 of the decoder shown in Fig. 2 and hence the description thereof will be omitted. The full-resolution decoding unit 131 is necessary only when high-resolution HDTV signals are required. When only SDTV signals are required, the full-resolution decoding unit 131 may be omitted.

A HD bit stream is applied to a variable-length decoding circuit 141 included in the quarter-resolution mismatching error correcting decoding unit 132. The variable-length decoding circuit 141 processes the HD bit stream for variable-length decoding, and gives decoded data and a quantizing scale to an inverse quantizing circuit 142. The inverse quantizing circuit 142 processes the input data for inverse quantization by using the quantizing scale to obtain representatives and gives the representatives to a selecting circuit 82. The selecting circuit 82 selects $4*4$ data in the upper left-hand portion (low-frequency components) among the $8*8$ data and gives the same to an IDCT circuit 83. The IDCT circuit 83 processes the $4*4$ data for IDCT to give difference data d4 to an arithmetic unit 84.

A variable-length decoding circuit 151 processes the difference bit stream for variable-length decoding to give mismatching error data d9 (= a5 - c7) to an arithmetic unit 152. Data d7 (= c7) obtained by motion-compensating data stored in a quarter-resolution frame memory 85 by a motion compensating circuit 86 is given to the arithmetic unit 152. A prediction mode signal representing a prediction mode provided by the variable-length decoding circuit 141 is given to the motion compensating circuit 86, and a half motion vector obtained by scaling down the motion vector provided by the variable-length decoding circuit 141 by half with respect to the vertical direction and the horizontal direction by a scaling circuit 87 is given to the motion compensating circuit 86.

The arithmetic unit 152 adds the output predicted image data d9 of the variable-length decoding circuit 151 and the output mismatching error data d9 of the motion compensating circuit 86 to correct the mismatching errors and provides corrected predicted image data d5 (= a5 - c7 + c7 = a5). The output data d5 of the arithmetic unit 152 is equal to the output data a5 of the IDCT circuit 113 of the encoder shown in Fig. 1, which cancels out mismatching errors. Accordingly, decoded data d6 (= a5 + a4 = a6) obtained by adding the output difference data d4 (= a4) by the IDCT circuit 83 and the output predicted image data d5 (= a5) of the arithmetic unit 152 by the arithmetic unit 84 does not contain mismatching errors, so that SDTV signals scarcely including noise (drift) can be obtained. then obtaining both the HDTV signals and the SDTV signals, the variable-length decoding circuit 141 and the inverse quantizing circuit 142 of the quarter-resolution mismatching error correcting decoding unit 132 can be used for the functions of the variable-length decoding circuit 71 and the inverse quantizing circuit 72 of the full-resolution decoding unit 131.

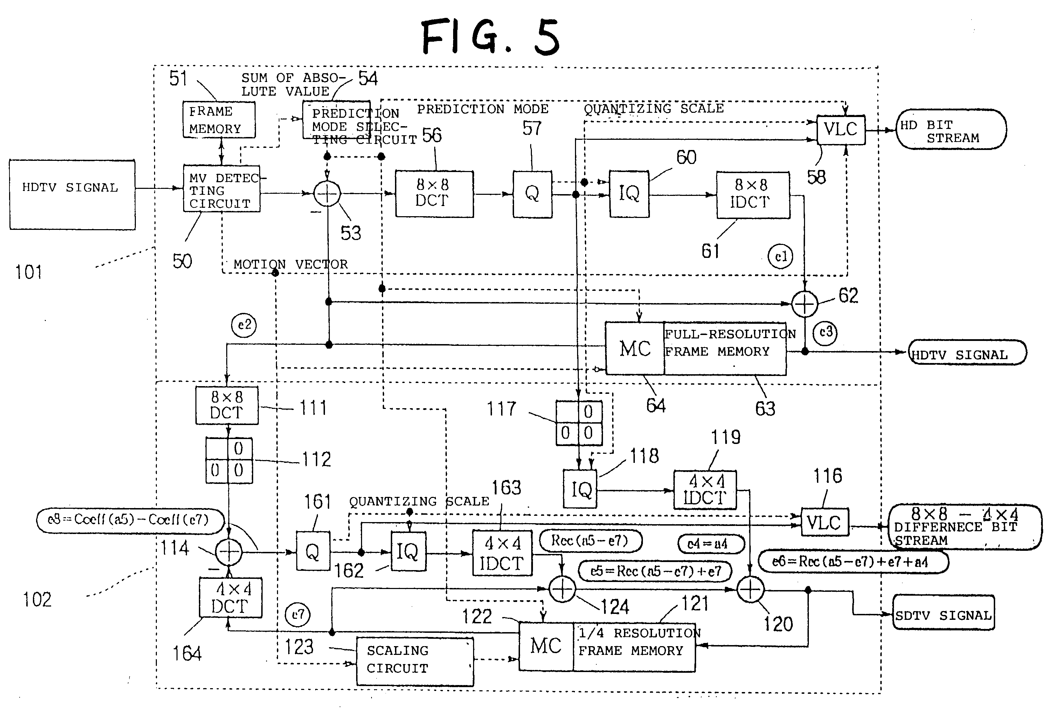

Fig. 5 shows an encoder in a second embodiment according to the present invention. The encoder in the second embodiment calculates DCT coefficients instead of calculating the mismatching errors in a space as pixel data, which is done by the encoder shown in Fig. 3. Accordingly, in the encoder shown in Fig. 5, an arithmetic unit 114 subtracts 4∗4 DCT coefficients Coeff(e7) produced through the DCT of predicted image data e7 provided by a motion compensating circuit 122 by a DCT circuit 164 from 4//∗4 DCT coefficients Coeff(a5) selected among the output of a DCT circuit 111 by a selecting circuit 112 to provide data e8 (= Coeff(a5) - Coeff(a7)).

The mismatching error signals is quantized by a quantizing circuit 161, and the output signal of the quantizing circuit 161 is coded by a variable-length coding circuit 116 to provide difference bit stream. The amount of information transmitted in the difference bit stream can be regulated by controlling the quantizing characteristics of the quantizing circuit 161.

The mismatching error data provided by the quantizing circuit 161 is processed for inverse quantization to obtain representatives, the representatives are processed for IDCT by an IDCT circuit 163 to obtain reproduced values (decoded values Rec(a5 - e7) and the reproduced values Rec(a5 - e7) are given to an arithmetic unit 124. Then, the arithmetic unit 124 provides data e5 (= Rec(a5 - e7) + a7). An arithmetic unit 120 adds the mismatching error data and prediction errors provided by the motion compensating circuit 122 to eliminate mismatching errors and provides data e6 (= Rec(a5 - e7) + a7 + a4).

The encoder in the second embodiment is the same in other respects and in functions as the encoder in the first embodiment shown in Fig. 3.

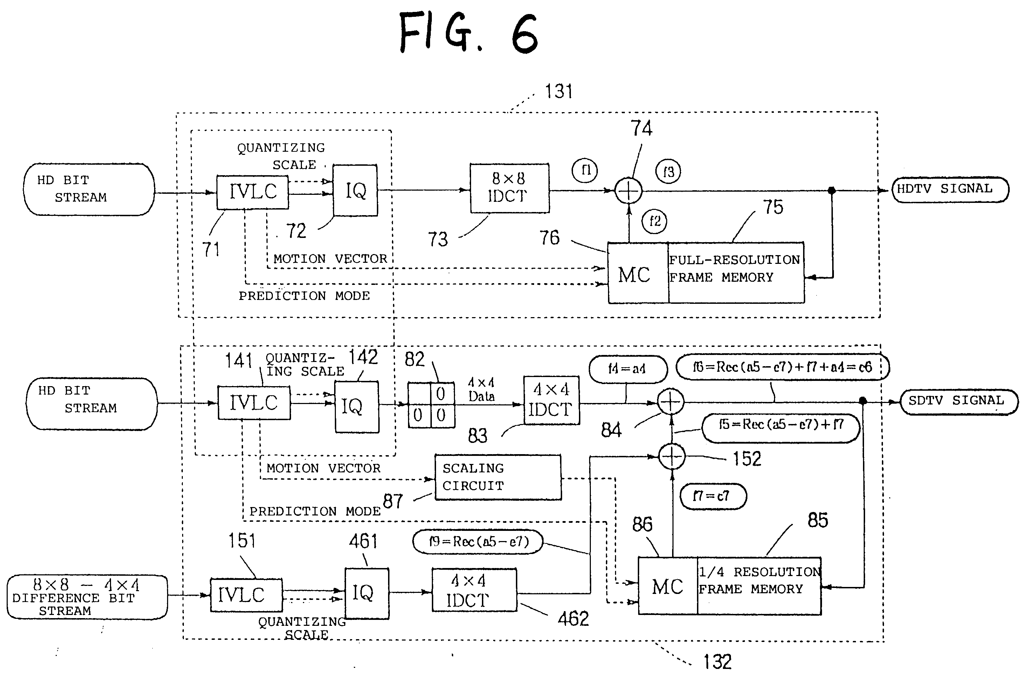

Fig. 6 shows a decoder embodying the present invention for decoding the data provided by the encoder shown in Fig. 5. Although the decoder shown in Fig. 6 is the same in basic configuration as the decoder shown in Fig. 4, in the decoder shown in Fig. 6, a difference bit stream (mismatching errors) is decoded by a variable-length decoding circuit 151 and the decoded difference bit stream is processed for inverse quantization by an inverse quantizing circuit 461 to obtain representatives. An IDCT circuit 462 processes the representatives provided by the inverse quantizing circuit 461 for IDCT and gives output data f9 (= Rec(a5 - e7)) to an arithmetic unit 152. The arithmetic unit 152 adds the output data of the IDCT circuit 462 and predicted image data f7 (= c7) provided by a motion compensating circuit 86 to cancel the mismatching errors and provides predicted image data f5 (= Rec(a5 - e7) + f7).

An arithmetic unit 84 adds the predicted image data f5 provided by the arithmetic unit 152 and difference data f4 (= a4) provided by an IDCT circuit 83 and provides 4∗4 pixel data (decoded image data) f6 (= Rec(a5 - e7) + f7 + a4 = e6).

The locally decoded data e6 provided by the arithmetic unit 120 of the encoder shown in Fig. 5 and the decoded data f6 provided by the arithmetic unit 84 of the decoder shown in Fig. 6 are somewhat different from the data a6 provided by the arithmetic unit 120 of the encoder shown in Fig. 1. However, the the data e6 (= f6) provided by the arithmetic unit 120 of the encoder shown in Fig. 5 is equal to the data f6 (=e6) provided by the arithmetic unit 84 of the decoder shown in Fig. 6, and there is no mismatching error between the data e6 and f6, that is, the the predicted image provided by the encoder and the predicted image provided by the decoder matches always each other and errors are not accumulated.

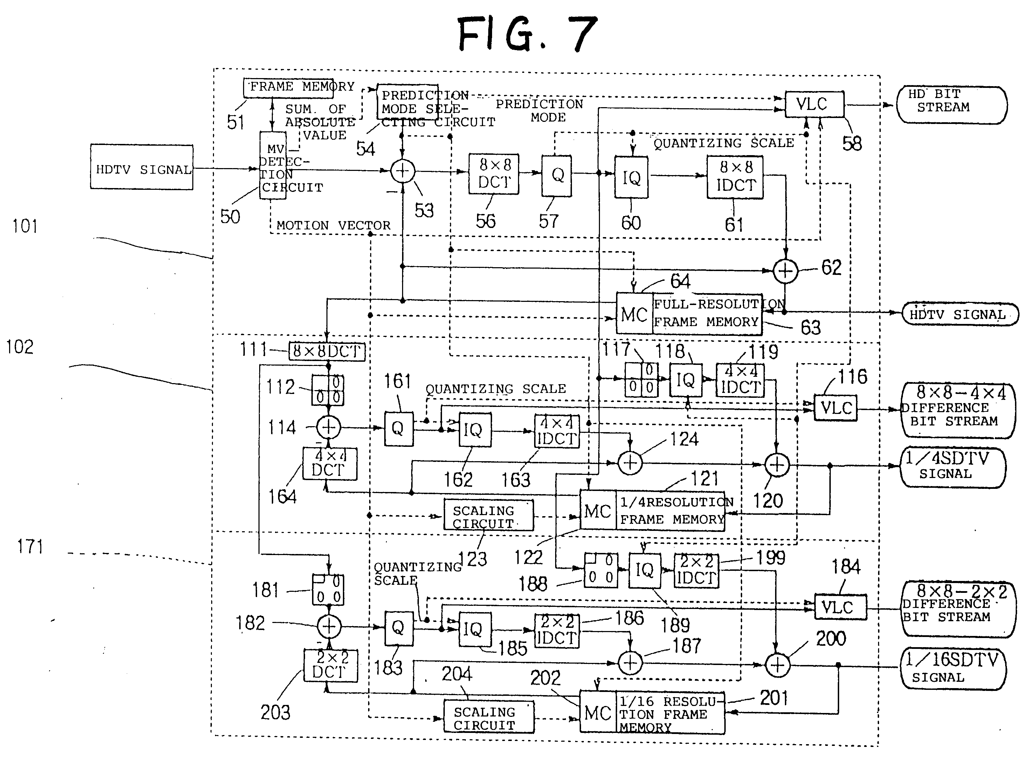

Fig. 7 shows an encoder in a third embodiment according to the present invention. This encoder is provided, in addition to a full-resolution encoding unit 101 and a quarter-resolution mismatching error correcting encoding unit 102, which are the same in configuration and function as those included in the encoder shown in Fig. 5, with a sixteenth-resolution mismatching error correcting encoding unit 171.

Basically, the configuration of the sixteenth-resolution mismatching error correcting encoding unit 171 is the same as that of the quarter-resolution mismatching error correcting encoding unit 102, except that the sixteenth-resolution mismatching error correcting encoding unit 171 is provided with an extracting circuit 188 which separates 2∗2 data included in the upper left-hand portion (low-frequency components) from 8∗8 data provided by a quantizing circuit 57 included in the full-resolution encoding unit 101 to obtain DCT coefficients corresponding to 2∗2 pixel data produced by thinning out the 8∗8 pixel data to 1/4 with respect to the vertical direction and the horizontal direction. The data provided by the extracting circuit 188 is processed for inverse quantization by an inverse quantizing circuit 189 to obtain representatives, the representatives are processed for IDCT by an IDCT circuit 199 to obtain difference data, and the difference data is give to an arithmetic unit 200.

A selecting circuit 181 selects 2∗2 DCT coefficients included in the upper left-hand portion among 8∗8 DCT factors of predicted image data provided by a DCT circuit 111 included in the quarter-resolution mismatching error correcting encoding unit 102, and gives the selected 2∗2 DCT coefficients to an arithmetic unit 182. Thus, DCT coefficients corresponding to 2∗2 predicted image data produced by thinning out the 8∗8 predicted image data to 1/4 with respect to the vertical direction and the horizontal direction are obtained. Also given to the arithmetic unit 182 are 2∗2 DCT coefficients obtained by processing data stored in a sixteenth-resolution frame memory 201 for motion compensation by a motion compensating circuit 202 and processing the output of the motion compensating circuit 202 for DCT by a DCT circuit 203. The arithmetic unit 182 subtracts the output of the DCT circuit 203 from the output of the selecting circuit 181 to produce mismatching error signals. A quantizing circuit 183 quantizes the mismatching error signals, a variable-length coding circuit 184 encodes the output of the quantizing circuit 183 to provide a difference bit stream (8*8 - 2*2).

The output of the quantizing circuit 183 is processed for inverse quantization by an inverse quantizing circuit 185 to obtain representatives, the representatives are processed for IDCT by an IDCT circuit 186, and the output of the IDCT circuit 186 is given to an arithmetic unit 187. The arithmetic unit 187 adds the 2*2 predicted image data provided by the motion compensating circuit 202 and the 2*2 mismatching error data provided by the IDCT circuit 186 to correct the mismatching errors in the predicted image data and gives the corrected predicted image data to the arithmetic unit 200.

The arithmetic unit 200 adds the 2*2 difference data provided by the IDCT circuit 199 and the corrected 2*2 predicted image data provided by the arithmetic unit 187 to provide locally decoded sixteenth-resolution SDTV signals. The output of the arithmetic unit 200 is stored in the sixteenth-resolution frame memory 201. A motion vector obtained by scaling down a motion vector provided by a motion vector detecting circuit to 1/4 with respect to the vertical direction and the horizontal direction is given to the motion compensating circuit 202. The motion compensating circuit 202 functions for motion compensation according to the motion vector given thereto.

In the third embodiment, a HD bit stream, a difference bit stream representing mismatching errors between a block of the 8*8 pixels and a block of 4*4 pixels, and a difference bit stream (8*8 - 2*2) representing mismatching errors between the block of 8*8 pixels and a block of 2*2 pixels are transmitted.

In the third embodiment, the amount of information represented by the (8*8 - 2*2) difference bit stream can be regulated by controlling the quantizing characteristics of the quantizing circuit 183.

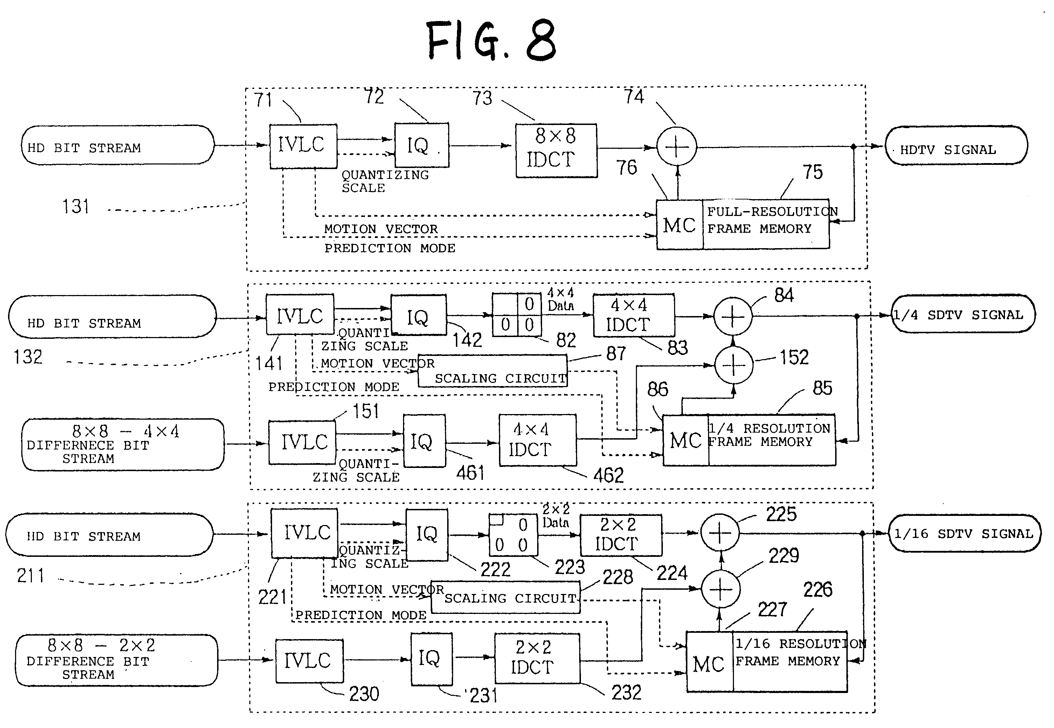

Fig. 8 shows a decoder in a third embodiment according to the present invention for decoding the data transmitted by the encoder shown in Fig. 7. The decoder in the third embodiment is provided, in addition to a full-resolution decoding unit 131 and a quarter-resolution mismatching error correcting decoding unit 132, which are the same in configuration as those of the decoder shown in Fig. 6, with a sixteenth-resolution mismatching error correcting decoding unit 211.

In the sixteenth-resolution mismatching error correcting decoding unit 211, a HD bit stream is decoded by a variable-length decoding circuit 221, and the output data of the variable-length decoding circuit 221 is processed for inverse quantization by an inverse quantizing circuit 222 to obtain representatives.

A selecting circuit 223 separates 2*2 DCT coefficients included in the upper left-hand portion from the 8*8 DCT coefficients provided by the inverse quantizing circuit 222. Thus, 2*2 DCT coefficients corresponding to 2*2 pixel data (difference data) produced by thinning out the 8*8 pixel data to 1/4 with respect to the vertical direction and the horizontal direction are obtained. The output data of the selecting circuit 223 is processed for IDCT by an IDCT circuit 224, and the output of the IDCT circuit 224 is give to an arithmetic unit 225.

The motion vector provided by the variable-length decoding circuit 221 is scaled down to 1/4 with respect to the vertical direction and the horizontal direction by a scaling circuit 228, and the scaled-down motion vector is given to a motion compensating circuit 227. The motion compensating circuit 227 processes the data stored in a sixteenth-resolution frame memory 226 for motion compensation according to the motion vector given thereto and data representing a prediction mode provided by the variable-length decoding circuit 221 to give a predicted image represented by 2*2 pixel data to an arithmetic unit 229.

The (8*8 - 2*2) difference bit stream is decoded by a variable-length decoding circuit 230, and the output of the variable-length decoding circuit 230 is processed for inverse quantization by an inverse quantizing circuit 321 to obtain representatives. The output of the inverse quantizing circuit 231 is processed for IDCT by an IDCT circuit 232 and the output of the IDCT circuit 232 is given to the arithmetic unit 229. The arithmetic unit 229 adds mismatching error signals between the 8*8 blocks provided by the IDCT circuit 232 and the 2*2 blocks, and the predicted image data provided by the motion compensating circuit 227 to cancel the mismatching error signals and gives a corrected predicted image data to the arithmetic unit 225. The arithmetic unit 225 adds the corrected predicted image data provided by the arithmetic unit 229 and the difference data provided by the IDCT circuit 224 to provide sixteenth-resolution SDTV data.

The encoder shown in Fig. 7, similarly to the encoder shown in Fig. 3, may substitute the quantizing circuits 161 and 183 by a switch, and may be the combination of the mismatching error correcting encoding units shown in Figs. 3 and 5. When the encoder is so constructed, the decoder is constructed so as to meet the kind of mismatching error correcting data used by the encoder.

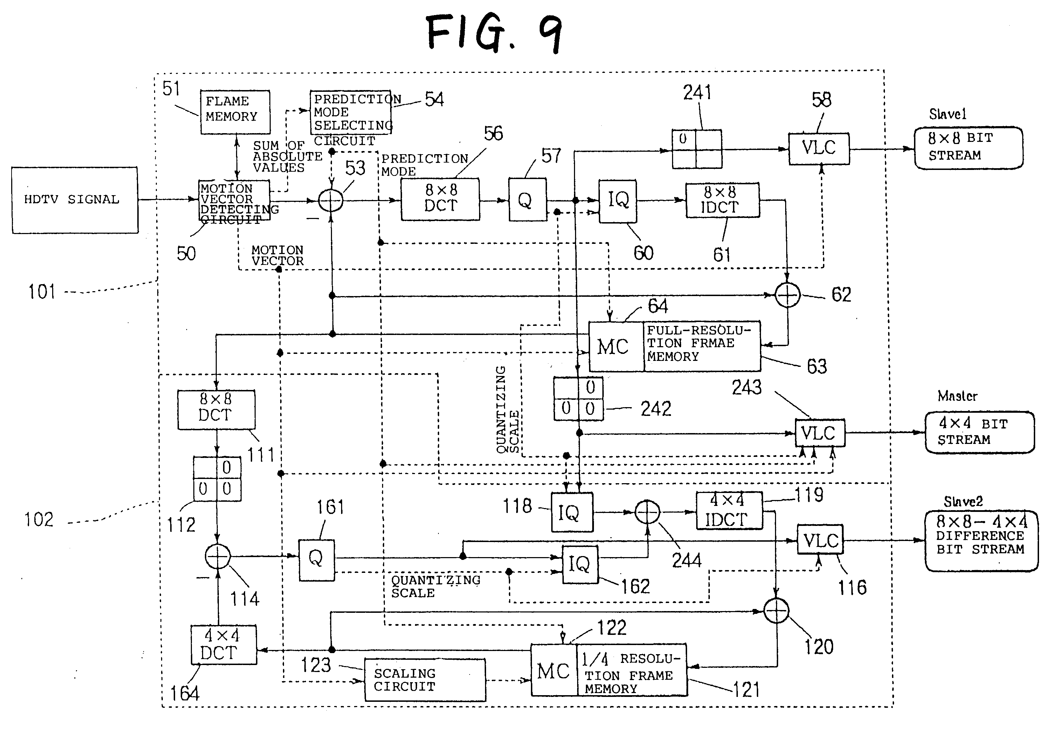

Fig. 9 shows an encoder in a fourth embodiment according to the present invention. In this embodiment, the output of a quantizing circuit 57 included in a full-resolution encoding block 101 is given through a selecting circuit 241 to a variable-length coding circuit 58. The selecting circuit 241 extracts (8*8 - 4*4) data among the 8*8 DCT coefficient data given thereto excluding 4*4 data included in the upper left-hand portion and gives the same to the variable-length coding circuit i8. The variable-length coding circuit 58 encodes the input data to provide an 8∗8 bit stream.

A selecting circuit 242 selects 4∗4 data in the upper left-hand portion, i. e., the data which are not selected by the selecting circuit 241, among the 8∗8 data provided by the quantizing circuit 57 and gives the same to a variable-length coding circuit 243. The variable-length coding circuit 243 encodes the 4∗4 data to provide a 4∗4 bit stream.

In this embodiment, the 8∗8 difference data provided by the quantizing circuit 57 are blocked into the 4∗4 bit stream corresponding to the 4∗4 data in the upper left-hand portion, and the 8∗8 bit stream excluding the former. A motion vector provided by a motion detecting circuit 50, a prediction mode provided by a prediction mode selecting circuit 54, and a quantizing scale provided by the quantizing circuit 57 are encoded by the variable-length coding circuit 58, and the coded data is transmitted in a 4∗4 bit stream. Naturally, those data may be encoded by the variable-length coding circuit 58 and the coded data may be transmitted in an 8∗8 bit stream. However, since the 8∗8 bit stream representing the data is not used by the decoder, it is preferable to transmit the 4∗4 bit stream.

A quarter-resolution mismatching error correcting encoding unit 102 is the same in fundamental configuration as that of the encoder shown in Fig. 5, except that the quarter-resolution mismatching error correcting encoding unit 102 in this embodiment is not provided with the IDCT circuit 163, provided with an IDCT circuit 119 that functions also for the IDCT of mismatching error data provided by an inverse quantizing circuit 162, and not provided with the selecting circuit 117 (Fig. 5). The output of the selecting circuit 242 is given to an inverse quantizing circuit 118. An arithmetic unit 244 adds difference data provided by the inverse quantizing circuit 118 and mismatching errors provided by the inverse quantizing circuit 162, the IDCT circuit 119 processes the output of the arithmetic unit 244 for IDCT, and the output of the IDCT circuit 119 is given to an arithmetic unit 120. The arithmetic unit 120, similarly to that of the encoder shown in Fig. 5, provides corrected, locally decoded image data. The rest of the configuration and functions are the same as those of the encoder shown in Fig. 5.

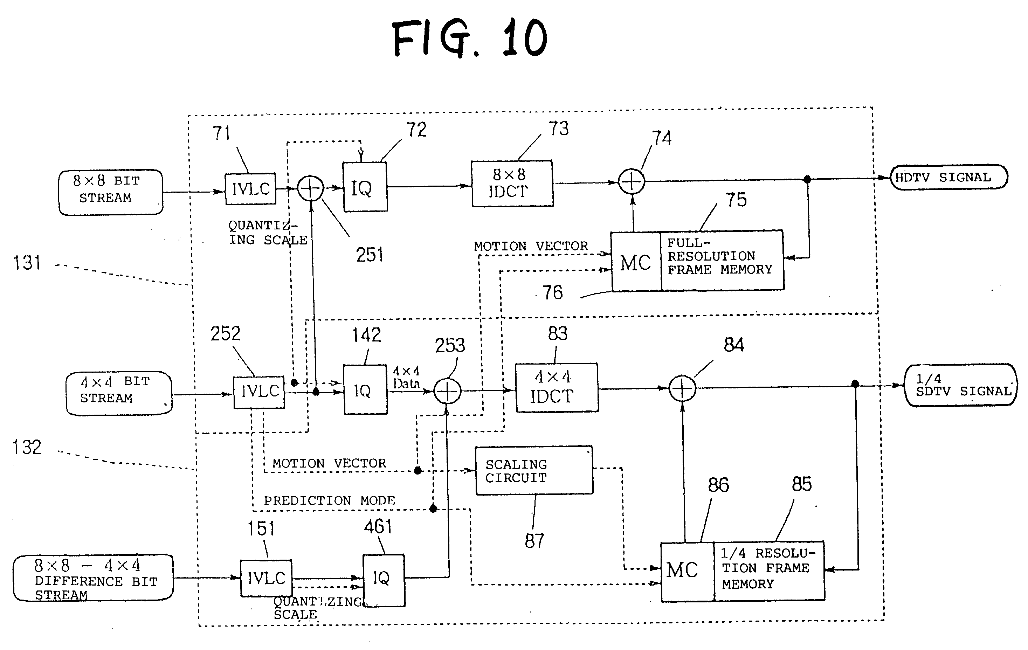

Fig. 10 shows a decoder in a fourth embodiment according to the present invention for decoding the data provided by the encoder shown in Fig. 9. In this embodiment, an 8∗8 bit stream is decoded by a variable-length decoding circuit 71 and the output of the variable-length decoding circuit 71 is given to an arithmetic unit 251. The 8∗8 bit stream does not include 4∗4 data in the low-frequency region among the 8∗8 data. Therefore, data representing 4∗4 data in the low-frequency region obtained by decoding a 4∗4 bit stream by a variable-length decoding circuit 252 is given to the arithmetic unit 251. The arithmetic unit 251 adds the respective outputs of the variable-length decoding circuits 71 and 252. Thus, the output of the arithmetic unit 251 represents 8∗8 pixel data (difference data). An inverse quantizing circuit 72, an IDCT circuit 73, an arithmetic unit 74, a full-resolution frame memory 75 and a motion compensating circuit 76 function in the above-mentioned manners for decoding the output of the arithmetic unit 251 to provide HDTV signals.

The motion compensating circuit 76 receives a motion vector and a prediction mode decoded by the variable-length decoding circuit 252.

In a quarter-resolution mismatching error correcting decoding unit 132, an inverse quantizing circuit 142 processes the 4∗4 pixel data provided by the variable-length decoding circuit 252 for inverse quantization to obtain representatives, and the representatives are given to an arithmetic unit 253. The difference bit stream is decoded by a variable-length decoding circuit 181, an inverse quantizing circuit 461 processes the output of the variable-length decoding circuit 131 for inverse quantization to obtain representatives, and the output of the inverse quantizing circuit 461 is given to the arithmetic unit 253. The arithmetic unit 253 adds the difference data provided by the inverse quantizing circuit 142 and mismatching errors provided by the inverse quantizing circuit 461 to correct mismatching errors and to provide corrected data (difference data).

An IDCT circuit 83 processes the output of the arithmetic unit 253 for IDCT and the output of the IDCT circuit 83 is given to an arithmetic unit 84. A scaling circuit 87 scales down a motion vector provided by the variable-length decoding circuit 252 to 1/2 with respect to the vertical direction and the horizontal direction and gives a scaled-down motion vector to a motion compensating circuit 86. The motion compensating circuit 86 processes data stored in a quarter-resolution frame memory 8 for motion compensation according to the motion vector provided by the scaling circuit 87 and gives predicted image data to the arithmetic unit 84. The arithmetic unit 84 adds the difference data provided by the IDCT circuit 83 and the predicted image data provided by the motion compensating circuit 86 to provide decoded quarter-resolution SDTV signals.

An encoder embodying the present invention provided, similarly to encoder shown in Fig. 35, with a prediction mode switching circuit 52, a DCT mode switching circuit 55 and converting circuits 65 and 66, and a decoder provided, similarly to the decoder shown in Fig. 39, with converting circuits 77, 78 and 88 will be described hereinafter.

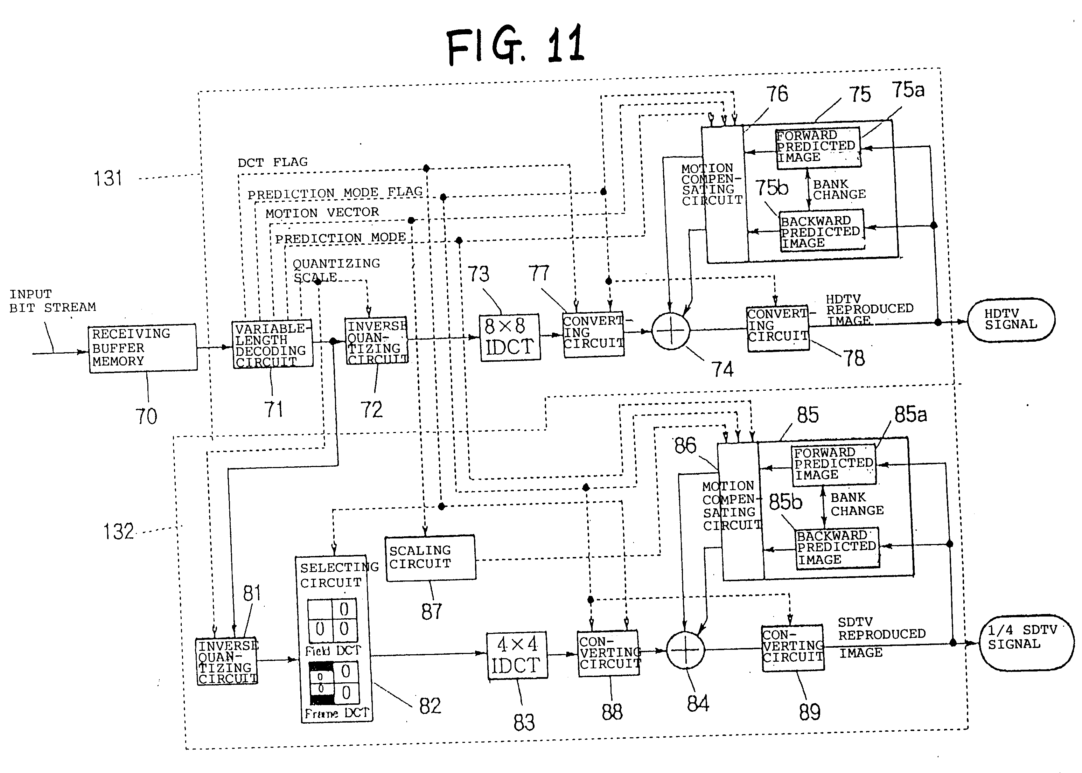

Fig. 11 shows a decoder in a fifth embodiment according to the present invention provided, similarly to the decoder shown in Fig. 39, with converting circuits 77, 78 and 88. An encoder to be used in combination with this decoder is the same as the encoder shown in Fig. 1 (Fig. 35).

Referring to Fig. 11, a HD bit stream representing 8*8 pixel data and transmitted by the encoder is applied to a receiving buffer memory 70. The HD bit stream includes a motion vector, a frame/field prediction mode flag, a frame/field DCT flag, a prediction mode (block type) and a quantizing scale. The decoder shown in Fig. 11 is basically the same in configuration and function as the decoder shown in Fig. 39, except that motion compensating circuits 76 and 86 included in the decoder shown in Fig. 11 is different in function from those of the decoder shown in Fig. 39. In this embodiment, motion compensation is performed according to the frame/field prediction mode. The relation between the frame/field prediction mode and motion compensation in this embodiment will be described hereinafter.

In the embodiment shown in Fig. 11, an inverse quantizing circuit 81 and a selecting circuit 82 may change places with each other.

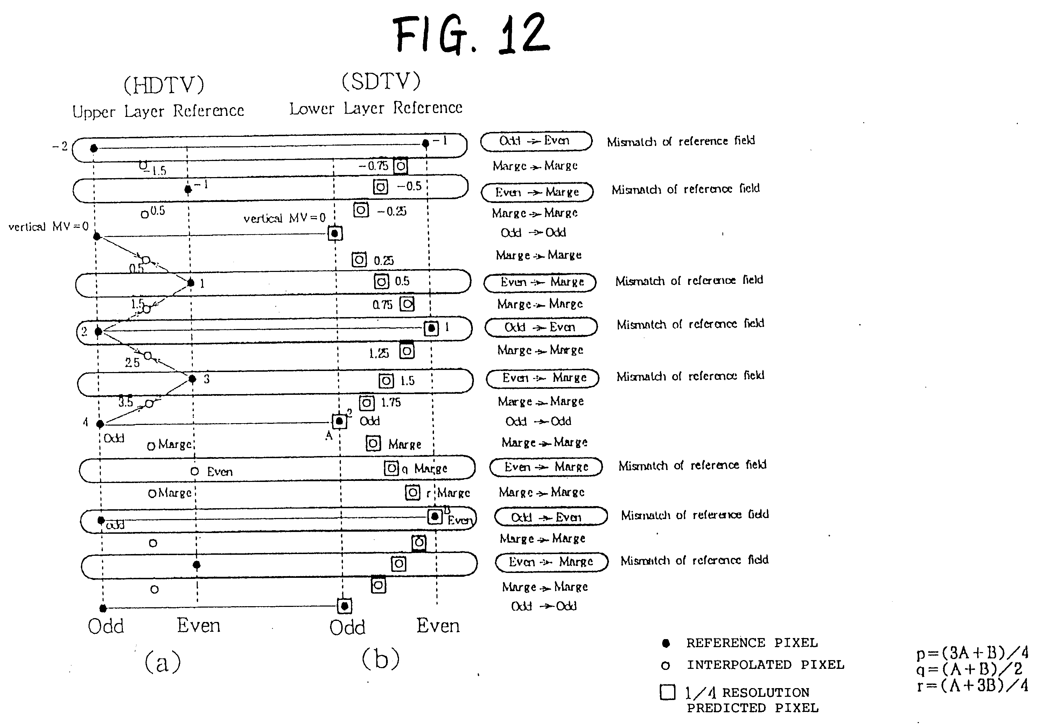

The motion compensating operation of the decoder shown in Fig. 39 will be described with reference to Fig. 12 to make clear the motion compensating operation of the decoder in this embodiment.

Fig. 12(a) shows a procedure for the motion compensation of high-resolution image data stored in the frame memory 63 of the encoder shown in Fig. 35 (the frame memory 75 of the decoder shown in Fig. 11) and Fig. 12(b) shows a procedure for the motion compensation of pixel data stored in a frame memory 85 included in the decoder shown in Fig. 11.

Suppose, for simplicity, that a motion vector 1 indicates only a vertical motion and indicates a vertical offset corresponding to one pixel on interleaved high-resolution screens. As shown in Fig. 12(a), a pixel motion-compensated by a motion vector "1" relative to a reference pixel having a motion vector (MV) " 0" is shifted down by one line to the first lower line, a pixel motion-compensated by a motion vector "2" is shifted down by two lines to the second lower line. When the motion vector is "1.5", the mean of the pixel on the first lower line and the pixel on the second lower line is calculated to determine the motion-compensated pixel (interpolated pixel) motion-compensated by using the motion vector "1.5".

Since quarter-resolution data is obtained by thinning out the pixels of high-resolution data to 1/2 with respect to the vertical direction and the horizontal direction, pixels on every other line in high-resolution odd fields are blocked into those of quarter-resolution odd fields and those of quarter-resolution even fields and the blocked pixels are stored separately in a frame memory 85. Since a motion vector given to a motion compensating circuit 86 is scaled down to 1/2 with respect to the vertical direction and the horizontal direction by a scaling circuit 87, the data motion-compensated by using the scaled-down motion vector is on the first lower line (the second lower line on the high-resolution screen) as shown in Fig. 12(b).

When producing pixels p, q and r between pixels A and B, the pixels p, q and r are calculated by using the following expressions.

$$p = (3A + B)/4$$
$$q - (A + B)/2$$
$$r = (A + 3B)/4$$

Since pixels corresponding to the motion vector are determined by interpolation, a pixel motion-compensated according to a high-resolution motion vector "3", for example, is a pixel motion-compensated according to a quarter-resolution motion vector "1.5". As shown in Fig. 12(b), the pixel produced by motion compensation using the motion vector "1.5" is the data of an intermediate field calculated on the basis of pixels in an odd field and an even field. Accordingly, a field difference appears between the data of the HDTV signals provided by the encoder and the data of SDTV signals provided by the decoder and, consequently, the interlace structure is spoiled.

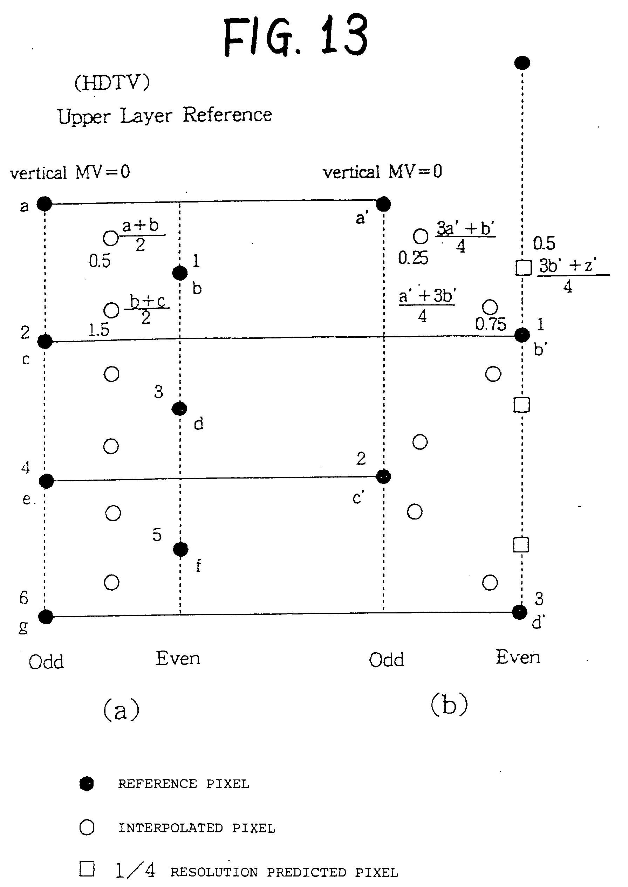

To maintain the interlace structure of the quarter-resolution image, the DCT mode switching circuit 55 must set the field DCT mode, that is, the motion compensation must be performed so as to maintain the interlace structure when the field DCT mode is set. Therefore, the motion compensating circuit 86 of the decoder shown in Fig. 11 carries out motion compensating operation shown in Figs. 13 to 16 when a DCT flag provided by a variable-length decoding circuit 71 indicates a field DCT process.

Fig. 13 shows a motion compensation process to be carried out when the variable-length decoding circuit 71 provides a field DCT flag, and a frame prediction mode flag is provided pixel, i.e., when the prediction mode switching circuit 52 sets a prediction mode. The motion compensating operations of the frame memory 75 and the motion compensating circuit 76 (either the encoder or the decoder) for motion-compensating the high-resolution image data shown in Fig. 13(a) are the same as those shown in Fig. 12(a). The motion compensating operations of the frame memory 85 and the motion compensating circuit 86 (the decoder) for the motion compensation of the low-resolution image data shown in Fig. 13(b) are different from those shown in Fig. 12(b).

In this embodiment, a low-resolution pixel corresponding to a high-resolution pixel b is calculated by using an expression: $(3b' + z')/4$, where $b'$ is a pixel in an even field and $z'$ is a pixel in an even field, instead of determining the same by interpolation on the basis of a pixel $a'$ in an odd field and the pixel $b'$ in an even field. Therefore, the data obtained by interpolation is data for even fields. Thus. the field of the high-resolution pixel b and the field of the low-resolution pixel $(3b' + z')$ (parities) coincide with each other (even fields), which suppresses spoiling the interlace structure and spoiling the natural motion of the image.

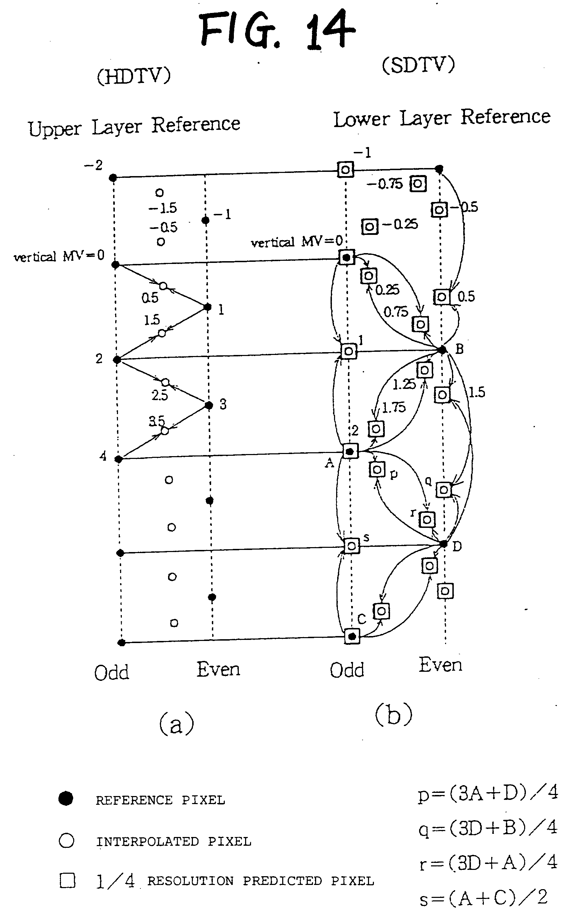

Fig. 14 shows another motion compensating operation embodying the present invention in the field DCT mode and the frame prediction mode. In this embodiment, pixel data is estimated by interpolation using a pixel corresponding to a motion vector "0" for an odd field and a pixel corresponding to a motion vector "2", instead of estimating a pixel B in an even field through the motion compensation of pixel data having a motion hector "0" using a motion vector "1". Thus, the field of the data coincides with that of the corresponding high-resolution pixel (a pixel corresponding to the motion vector "2") (odd fields).

In other words, the embodiment shown in Fig. 13 gives priority to the low-resolution reference pixel b' and refers to the pixel b' as a motion-compensated pixel when the low-resolution reference pixel b' corresponding to the high-resolution pixel c exists. On the other hand, the embodiment shown in Fig. 14 forms an interpolated pixel so that the fields coincide with each other even if a low-resolution pixel B exists, when the field of the low-resolution pixel B is different from that of the corresponding high-resolution pixel (pixel having a motion vector "2"), because the high-resolution pixel is in an odd field while the low-resolution pixel is in an even field.

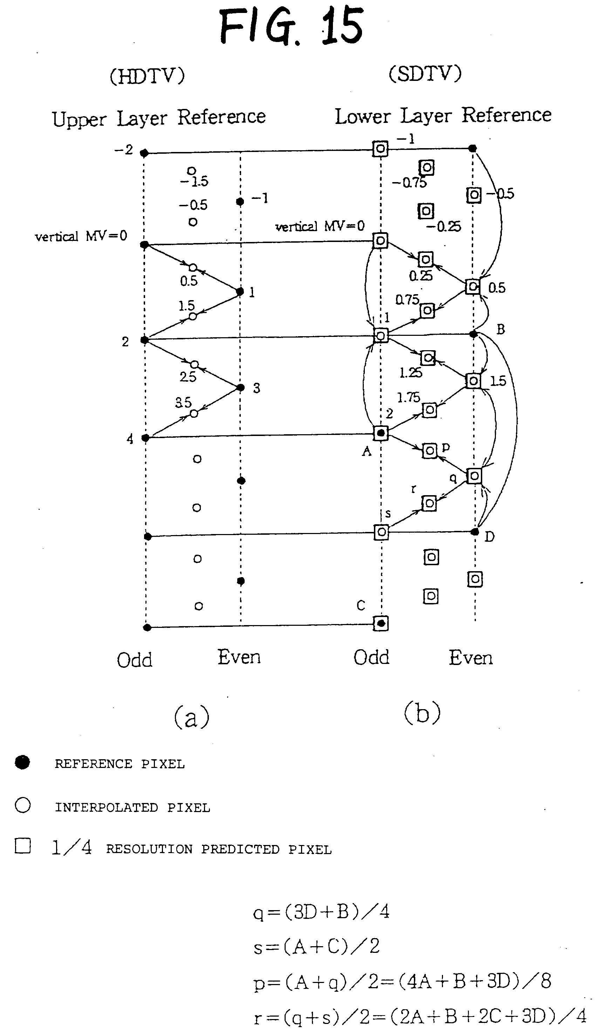

Fig. 15 shows a further motion compensating operation embodying the present invention in the field DCT mode and the frame prediction mode. In this embodiment, pixel data corresponding to high-resolution pixels is determined by interpolation in both an odd field and an even field so that the fields will coincide with each other. For example, a pixel in an even field corresponding to a motion vector "1.5" is determined by weighted interpolation using pixels B and D in an even field. Thus, the field and position of a high-resolution pixel corresponding to a motion vector "3" correspond to those of the low-resolution pixel. A pixel corresponding to a motion vector "1.25" is determined by interpolation using pixels respectively corresponding to motion sectors "1" and "1.5", so that the field and position of the high-resolution pixel data and those of the low-resolution pixel data coincide perfectly with each other.

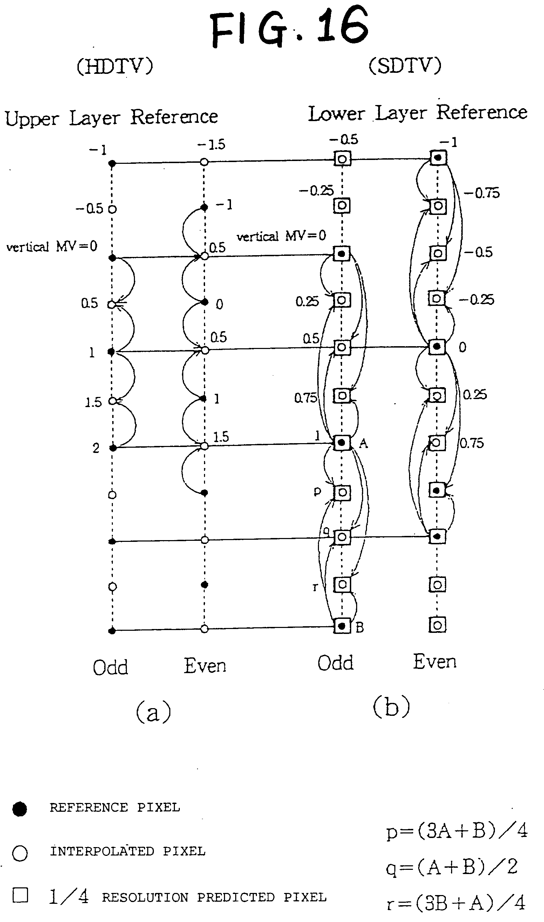

Fig. 16 shows a motion compensating operation embodying the present invention in the field DCT mode and the field prediction mode. As shown in Fig. 16, pixel data in an odd field is determined by interpolation using another pixel data in the odd field, and pixel data in an even field is determined by interpolation using another pixel data in the even field.

Although the foregoing motion compensating operation is performed in the field DCT mode, the motion compensating operation in the field DCT mode may be performed in the frame DCT mode or the conventional motion compensating operation shown in Fig. 12 may be performed.

When the field DCT mode is set while the frame prediction mode and the field prediction mode are suitably selected by the encoder, the decoder carries out the foregoing motion compensating operation to provide quarter-resolution interlace images that move smoothly.

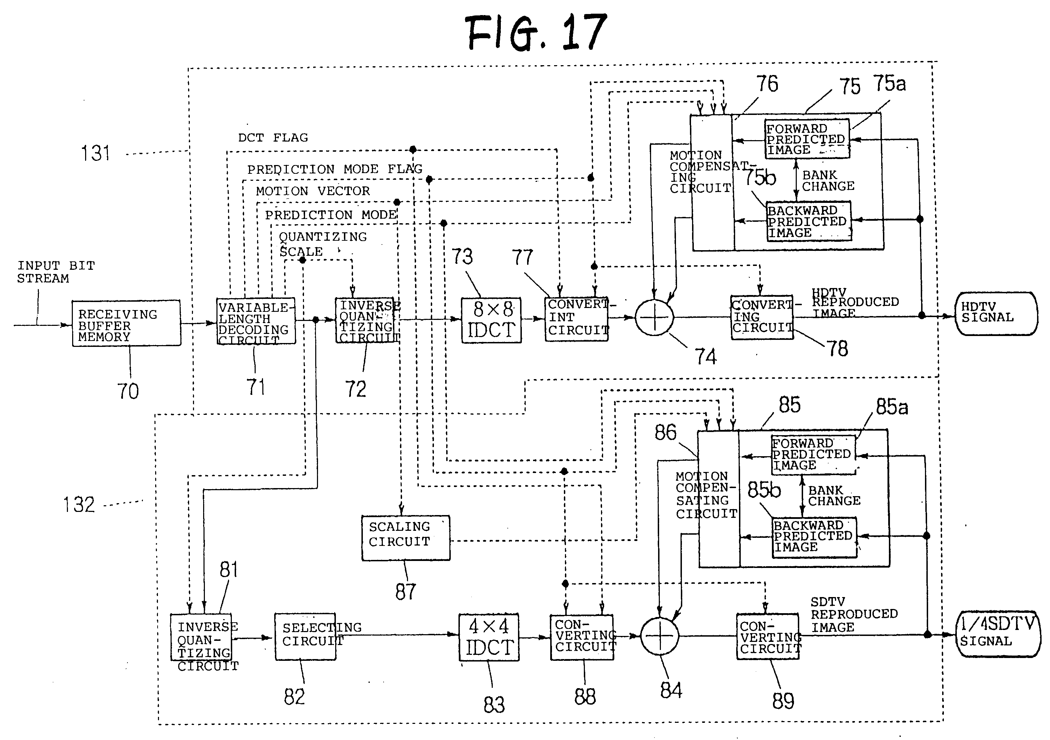

Fig. 17 shows a decoder in a sixth embodiment according to the present invention. An encoder to be used in combination with this decoder is the same as that shown in Fig. 35. Basically, the decoder shown in Fig. 17 is the same in configuration and function as the decoder shown in Fig. 11, except that the operation of a selecting circuit 82 included in this decoder according to a DCT flag provided by a variable-length decoding circuit 71 is different from that of the selecting circuit 82 of the decoder shown in Fig. 11.

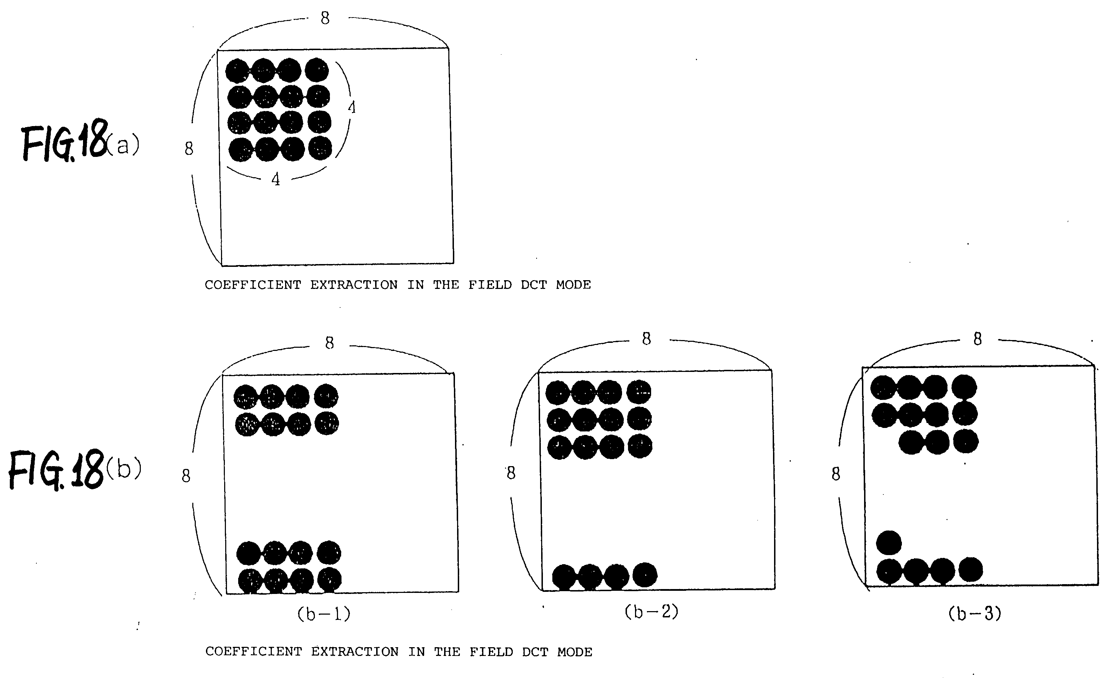

When the field DCT mode is set, the selecting circuit 82 selects 4∗4 DCT coefficients in the upper left-hand portion shown in Fig. 18(a) corresponding to a low-frequency range among 8∗8 DCT coefficients provided by an inverse quantizing circuit 81. Consequently, the operation of the decoder shown in Fig. 17 is the same as that of the decoder shown in Fig. 11.

When the frame DCT mode is set, the selecting circuit 82 replaces some of the selected 4∗4 pixels in the upper left-hand portion with some of pixels in the lower left-hand portion representing the interlace structure as shown in Fig. 18(b). Naturally, such replacement is not executed actually; only the DCT coefficients at predetermined positions are extracted from the 8∗8 DCT coefficients. The 4∗2 DCT coefficients in the upper left-hand portion and 4∗2 DCT coefficients in the lower left-hand portion may be selected among the 8∗8 pixels (Fig. (b-1)), the 4∗3 DCT coefficients in the upper left-hand portion and 4∗1 DCT coefficients in the lower left hand portion may be selected (Fig. (b-2)) or the 4∗2 pixels in the upper left-hand portion, the 3∗1 pixels excluding the head pixel on the third line in the upper left-hand portion, the head pixel among the pixels on the second line from the bottom and the 4∗1 pixels on the bottom line may be selected (Fig. 18(b-3)).

As mentioned above, in the field DCT mode, the interlace structure can be reconstructed by forming the data of a frame through the collection of the data of fields. Therefore, the 4∗4 pixels in the upper left-hand portion corresponding to the low-frequency components are extracted from the 8∗8 pixels. On the other hand, since the data of the odd lines and those of the even lines are processed in a mixed condition as shown in Fig. 37(A) in the frame DCT mode, it is highly probable that the interlace structure is destroyed if the 4∗4 pixels in the upper left-hand portion corresponding to the low-frequency region are selected among the 8∗8 pixels. Accordingly, some of the pixels corresponding to the interlace structure, i.e., the pixels in the lower left-hand portion among the 8∗8 pixels, are extracted to maintain the interlace structure.

The embodiment shown in Fig. 17 can be combined with the embodiment (method using motion compensation) shown in Fig. 11.

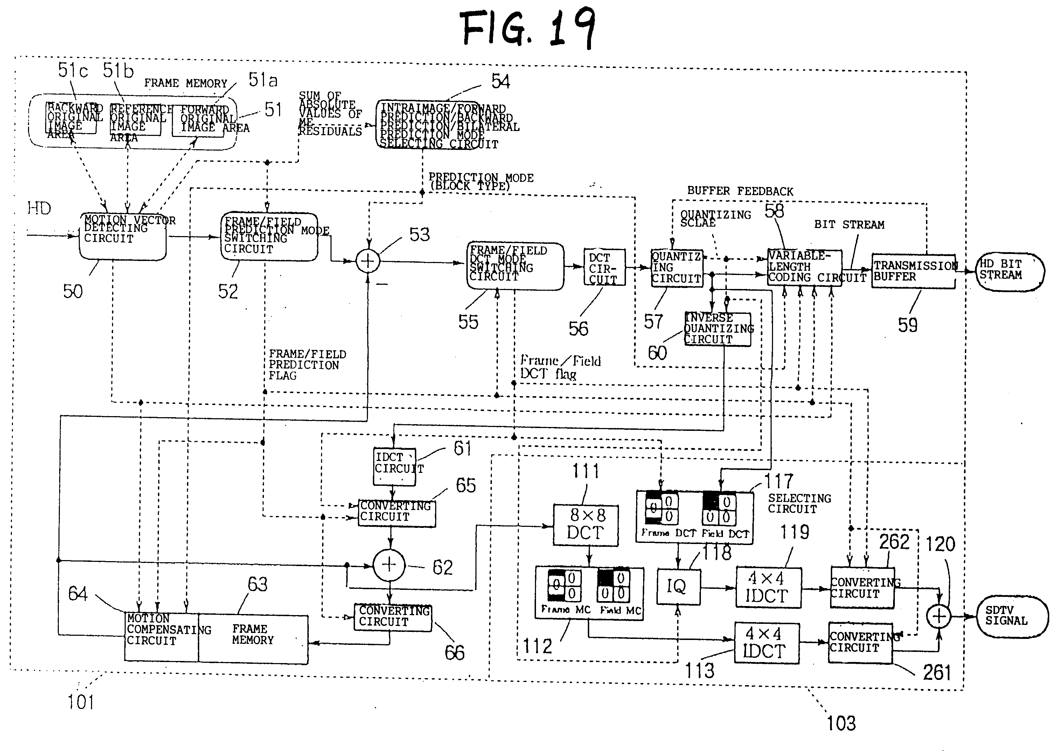

Fig. 19 shows an encoder in s seventh embodiment according to the present invention. A full-resolution encoding unit 101 included in this encoder is the same in configuration as the encoder shown in Fig. 35. This encoder is provided with a quarter-resolution image forming unit 103 and capable of locally decoding quarter-resolution SDTV signals. Basically, the configuration of the quarter-resolution image forming unit 103 is the same as that of the quarter-resolution image forming unit shown in Fig. 1. In the quarter-resolution image forming unit 103 shown in Fig. 19, a selecting circuit 112 selects a DCT coefficient extracting range according to a prediction mode flag provided by a prediction mode switching circuit 52, and a selecting circuit 117 changes the DCT coefficient selecting range according to a DCT flag provided by a DCT mode switching circuit 55. The output of an IDCT circuit 119 is given through a converting circuit 261 to an arithmetic unit 120, and the output of an IDCT circuit 113 is given through a converting circuit 262 to the arithmetic unit 120.

When the field prediction mode is set, the selecting circuit 112 selects 4∗4 DCT coefficients in the upper left-hand portion among 8∗8 DCT coefficients provided by a DCT circuit 111 and sends the selected 4∗4 DCT coefficients to an IDCT circuit 113. When the frame prediction mode is set, the selecting circuit 112 selects the DCT coefficients in a manner shown in Fig. 18(b); for example, the selecting circuit 112 selects 4∗2 DCT coefficients in the upper left-hand portion and 4∗2 DCT coefficients in the lower left-hand portion and sends the selected DCT coefficients to the IDCT circuit 113. The IDCT circuit 113 processes the input data for IDCT and gives the processed data to the converting circuit 261. The converting circuit 261, similarly to a converting circuit 66, rearranges the input data in an arrangement for the frame prediction mode, and gives the rearranged data to the arithmetic unit 120.

When the field DCT mode is set, the selecting circuit 117 selects 4∗4 DCT coefficients in the upper left-hand portion among the 8∗8 DCT coefficients provided by a quantizing circuit 57 and gives the same to an inverse quantizing circuit 118. When the frame DCT mode is set, the selecting circuit 117 selects the DCT coefficients in a manner shown in Fig. 18(b) and sends the same to the inverse quantizing circuit 118. The inversely quantized data provided by the inverse quantizing circuit 118 is processed for IDCT by the IDCT circuit 119, and the output of the IDCT circuit 119 is given to a converting circuit 262. The converting circuit 262 rearranges the output data of the IDCT circuit 119 in an arrangement for the frame DCT mode and gives the rearranged data to the arithmetic unit 120. The arithmetic unit 120 adds the respective outputs of the converting circuits 261 and 262 to provide decoded SDTV signals.

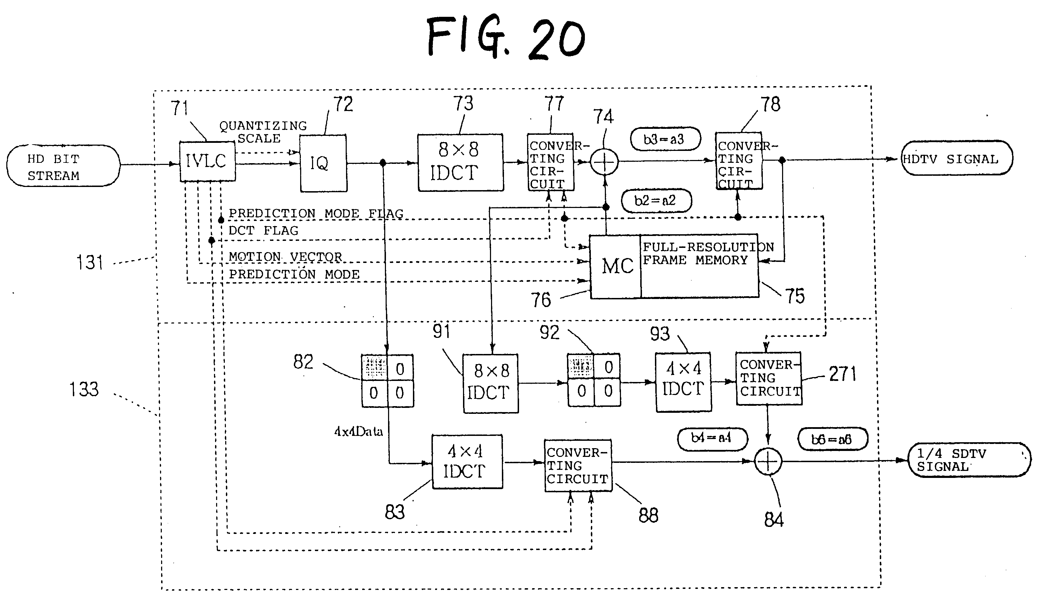

Fig. 20 shows a decoder in a seventh embodiment according to the present invention for decoding data encoded by the encoder shown in Fig. 19. This decoder is provided with a full-resolution decoding unit 131 the same in configuration as the full-resolution decoding unit 131 shown in Fig. 11. Basically, a quarter-resolution image decoding unit 133 of this decoder is the same in configuration as that shown in Fig. 2. In the quarter-resolution image decoding unit 133 of this decoder, a converting circuit 88 is interposed between an IDCT circuit 83 and an arithmetic unit 84 to rearrange the data provided by the IDCT circuit 83 for the frame DCT mode and to give the rearranged data to the arithmetic unit 84. The arithmetic unit 81 adds the respective outputs of the converting circuit 88 and a converting circuit 271 to provide decoded SDTV signals.

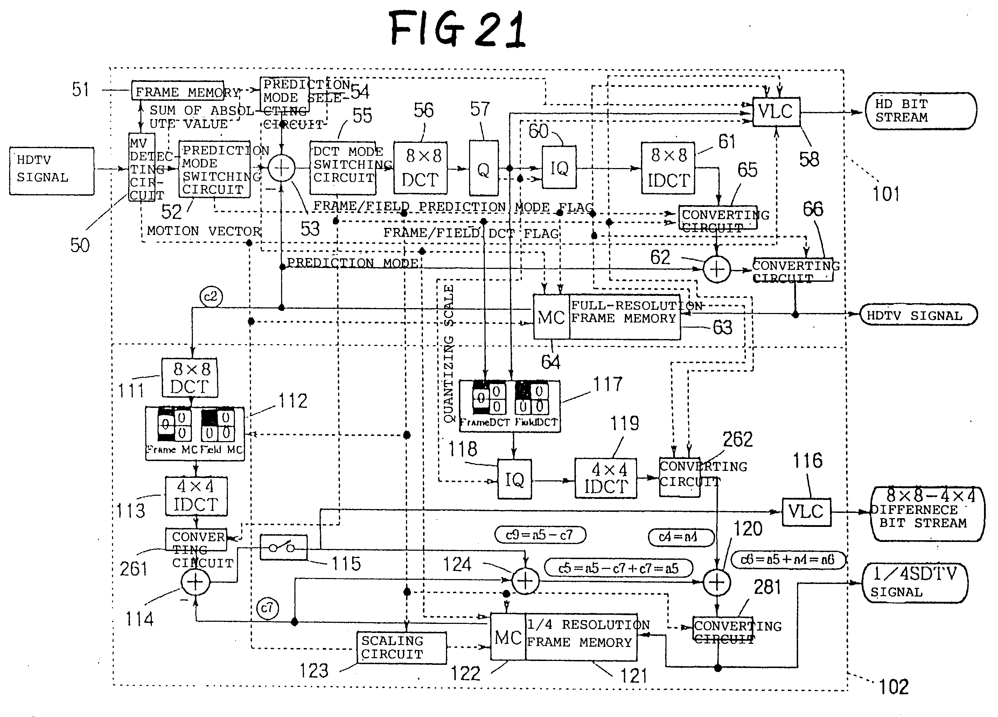

Fig. 21 shows an encoder in an eighth embodiment according to the present invention, which is a combination of the encoders shown in Figs. 3 and 19. A full-resolution encoding unit 101 included in this encoder is the same in configuration as the full-resolution encoding unit 101 of the encoder shown in Fig. 19.

Basically, a quarter-resolution mismatching error correcting encoding unit 102 included in this encoder is the same in configuration as the quarter-resolution mismatching error correcting encoding unit 102 shown in Fig. 3. In this encoder, a selecting circuit 112, similarly to the selecting circuit 112 of the encoder shown in Fig. 19, changes the data to be selected among the output data of a DCT circuit 111 according to the set prediction mode. The output of the selecting circuit 112 is processed for IDCT by an IDCT circuit 113, the output of the IDCT circuit 113 is rearranged in an arrangement for the frame prediction mode, and the rearranged data is given to an arithmetic unit 114. A selecting circuit 117, similarly to the selecting circuit 117 of the encoder shown in Fig. 19, selects data among those provided by a quantizing circuit 57 according to the set DCT mode and gives the same to an inverse quantizing circuit 118. The inversely quantized data provided by the inverse quantizing circuit 118 is processed for IDCT by an IDCT circuit 119, a converting circuit 262 rearranges the output data of the IDCT circuit 119 in the same arrangement as the arrangement of the output data of a motion compensating circuit 122, and the rearranged data is given to an arithmetic unit 120.

In this embodiment, the output of the arithmetic unit 120 is rearranged by a converting circuit 281 according to the set prediction mode in an arrangement for the frame prediction mode (the field prediction mode when a field memory is used as a frame memory 121), and the rearranged data is stored in the quarter-resolution frame memory 121.

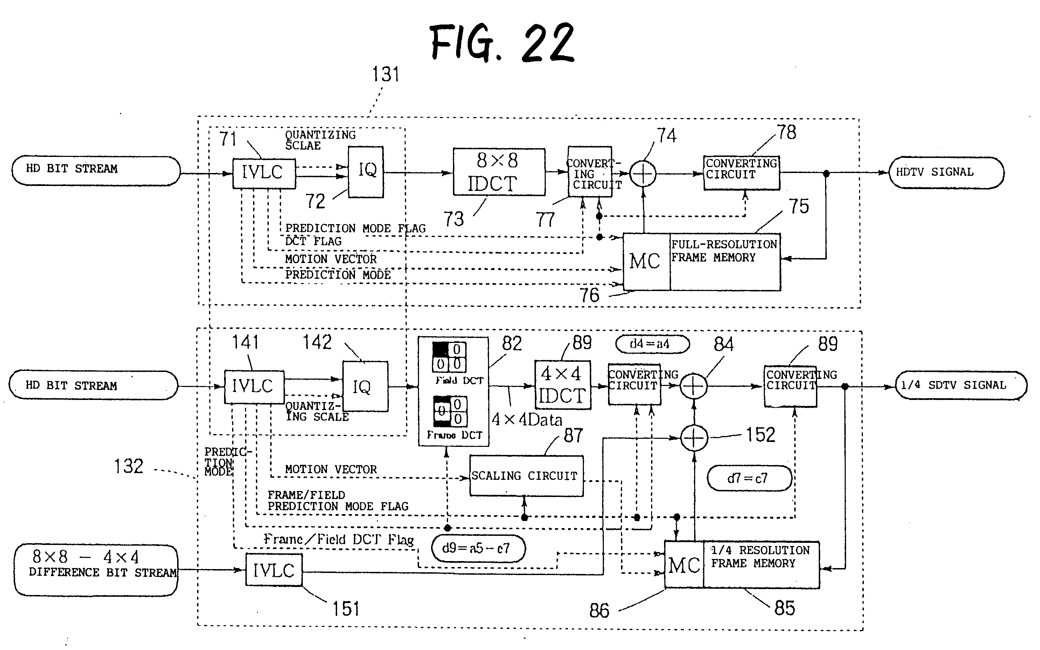

Fig. 22 shows a decoder in an eighth embodiment according to the present invention for decoding data encoded by the encoder shown in Fig. 21. This decoder is a combination of the decoders shown in Figs. 4 and 17. A full-resolution decoding unit 131 included in this decoder is the same in configuration as that of the decoder shown in Fig. 17. Basically, a quarter-resolution mismatching error correcting decoding unit 132 included in this decoder is the same in configuration as that of the decoder shown in Fig. 4. This quarter-resolution mismatching error correcting decoding unit 132, similarly to that shown in Fig. 17, has converting circuits 88 and 89 connected respectively to the input and output of an arithmetic unit 84 for operation according to a prediction mode and a DCT mode. A selecting circuit 82 selects data according to a DCT flag in a manner similar to that previously explained with reference to Fig. 17.

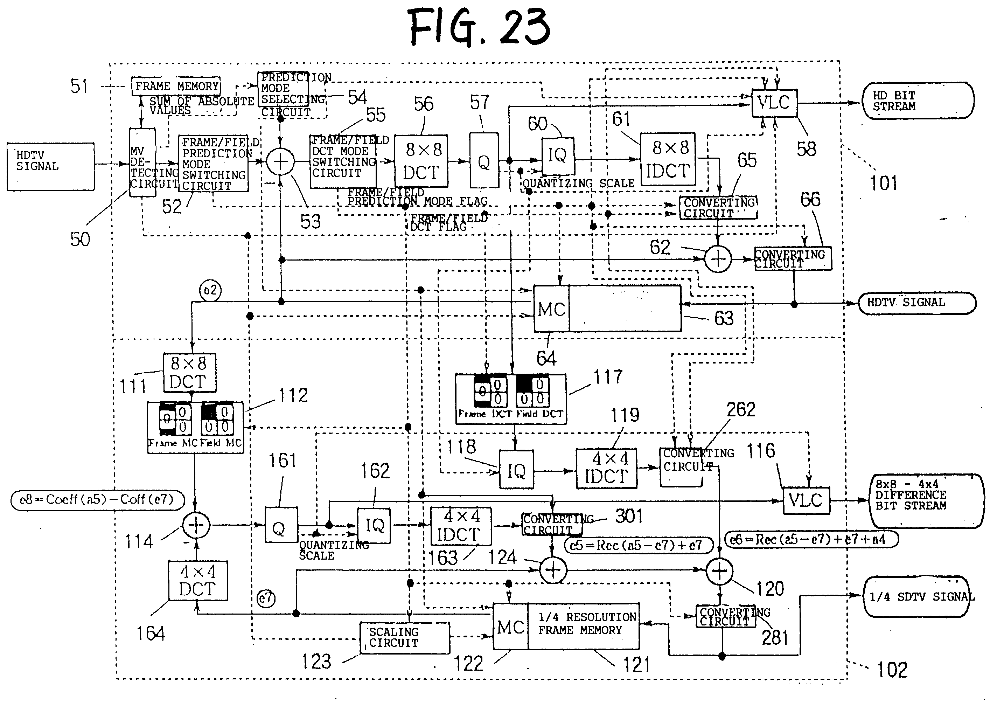

Fig. 23 shows an encoder in a ninth embodiment according to the present invention. This encoder, similarly to the encoder shown in Fig. 5 formed by substituting the switch 115 of the encoder shown in Fig. 3 by the quantizing circuit 161, is provided with a quantizing circuit 161 substituting the switch 115 of the encoder shown in Fig. 21. The encoder in this embodiment, similarly to the encoder shown in Fig. 5, processes the output of the quantizing circuit 161 for inverse quantization by an inverse quantizing circuit 162, and processes the output of the inverse quantizing circuit 162 for IDCT by an IDCT circuit 163. A converting circuit 301 rearranges the output of the IDCT circuit 163 according to a prediction mode flag in the same arrangement as that of the data provided by a motion compensating circuit 122, and the rearranged data is given to an arithmetic unit 124. Therefore, the encoder is not provided with any converting circuit corresponding to the converting circuit 261 of the encoder shown in Fig. 21. The rest of operations of this encoder are the same as those of the encoder shown in Fig. 21.

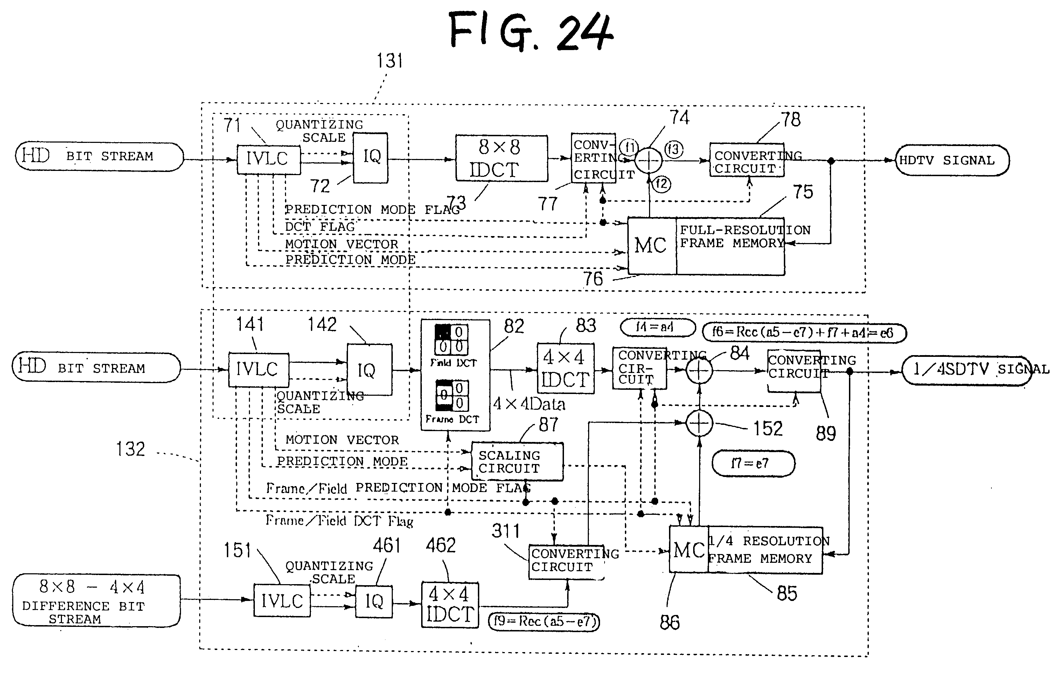

Fig. 24 shows a decoder in a ninth embodiment according to the present invention for decoding the data provided by the encoder shown in Fig. 23. This decoder, similarly to that shown in Fig. 6, processes the output of a variable-length decoding circuit 151 shown in Fig. 22 for inverse quantization by an inverse quantizing circuit 461 and processes the output of the inverse quantizing circuit 461 for IDCT by an IDCT circuit 462. The output of the IDCT circuit 462 is rearranged according to a prediction mode flag provided by a variable-length decoding circuit 141 in the same arrangement as that of the data provided by a motion compensating circuit 86, and the rearranged data is given to an arithmetic unit 152. The rest of operations of this decoder are the same as those of the decoder shown in Fig. 22.

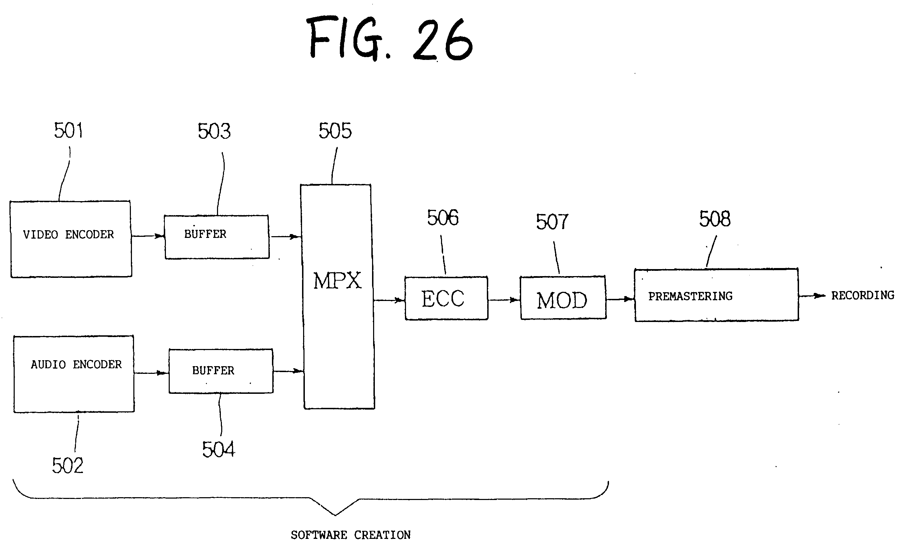

The data provided by the foregoing encoders is recorded on recording media 8. A method of fabricating the recording media will be described hereinafter with reference to Figs. 2 and 26.

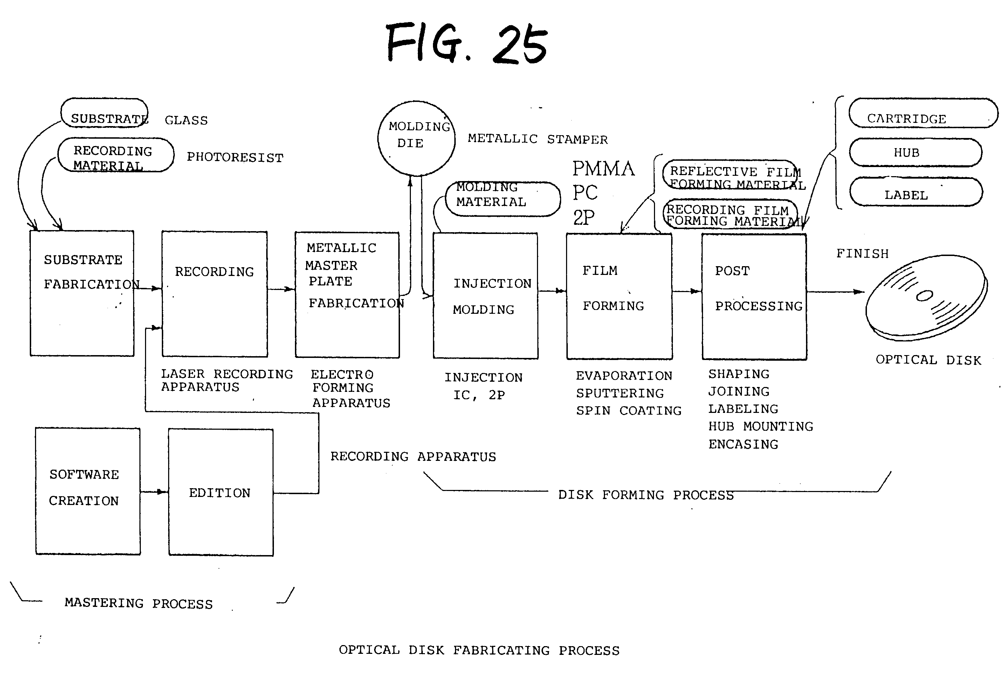

As shown in Fig. 25, a film of a recording material, such as a photoresist, is formed over the surface of a substrate, such as a glass substrate, to form a recording substrate.

Then, as shown in Fig. 26, video data produced through predictive coding by a video encoder 501 is stored temporarily in a buffer 503 and audio data produced through coding by an audio encoder 502 is stored temporarily in a buffer 504. The video data and the audio data stored respectively in the buffers 503 and 50 are multiplexed together with a synchronizing signal by a multiplexer (MPX) 505 to produce a composite signal. An error correcting coding circuit (ECC) 506 adds error correcting codes to the composite signal. A modulating circuit (MOD) 507 modulates the composite signal for predetermined modulation, and then the modulated composite signal is recorded temporarily, for example, on a magnetic tape to complete software. When necessary, the software is edited by using a premastering device 508 to produce a recording signal of a format suitable for recording the recording signal on an optical disk.

Then, as shown in Fig. 25, a laser beam is modulated according to the recording signal and photoresist film is irradiated with the modulated laser beam to expose the photoresist film in a pattern corresponding to the recording signal.

The exposed recording substrate is subjected to a developing process to form pits in the recording substrate. Then, the recording substrate is subjected to an electroforming process or the like in which the pits are duplicated in the recording substrate to obtain a metallic master plate. The metallic master plate is used for forming a metallic stamper for use as a molding die.

A resin, such as a PMMA (polymethyl methacrylate resin) or a PC (polycarbonate resin), is injected into the molding die by, for example, an injection molding method and the injected resin is hardened or a 2P (ultraviolet-hardening photopolymer) is applied to the surface of the metallic stamper in a film, the film is irradiated with ultraviolet radiation to harden the film. Thus the metallic stamper is duplicated in a resin replica having the pits corresponding to those formed in the metallic stamper.

A reflecting film is formed over the surface of the resin replica by an evaporation process, a sputtering process or a spin-coating process.

Then, the replica is subjected to necessary processes including forming the replica in a predetermined inside diameter and a predetermined outside diameter and putting two replicas together to form a disk. A label is attached to the disk, a hub is attached to the disk and the disk is put in a cartridge to complete an optical disk.

Although the present invention has been described as applied to encoders employing DCT for band blocking, the present invention is applicable also to encoders which processes input two-dimensional image data for predetermined transformation or blocking to encode the input two-dimensional image data, such as an encoder which employs QMF for subband blocking and an encoder which employs wavelet transformation for octave blocking.

The present invention is applicable to decoders which decode transformed and coded data or blocked and coded data as well as to decoders which decode data obtained by DCT. In those decoders, for example, the quarter-resolution decoder processes data in a quarter portion in the low-frequency region or similar data among all the encoded coefficient data for inverse transformation or reconstruction.

Although the present invention has been described as applied to encoding and decoding quarter-resolution image data and sixteenth-resolution image date, the present invention is applicable also to encoding and decoding image data of a resolution lower than the normal resolution, other than quarter resolution and sixteenth resolution.

As is apparent from the foregoing description, embodiments of the present invention enable mismatching errors to be coded and decoded to correct the mismatching errors and, consequently, causes of deteriorating the quality of pictures can be suppressed.

**Claims**

1. An image signal coding method that subjects difference image signals representing the differences of input image data from predicted image data to transformation or blocking to produce predetermined coefficient data, and codes the predetermined coefficient data, said image signal coding method comprising steps of:
   producing first data by the inverse transformation or reconstruction of the coefficient data;
   extracting a predetermined portion of the coefficient data;
   producing second data by the inverse transformation or reconstruction of the coefficient data included in the predetermined portion;
   producing third data by extracting data corresponding to the predetermined portion from the first data and subjecting the extracted data to inverse transformation or reconstruction; and
   calculating the differences between the second data and the third data, and coding the differences.

2. An image signal coding method according to claim 1, wherein the transformation is the orthogonal transformation of a block of N*N pixels.

3. An image coding method according to claim 1, wherein the transformation is wavelet transformation.

4. An image signal coding method according to claim 1, wherein said blocking is subband blocking.

5. An image signal coding method according to claim 2, wherein the orthogonal transformation is DCT.

6. An image signal coding method according to claim 2, wherein the predetermined portion is a block of n*n pixels (n = 1, 2, 3, ..., N-1).

7. An image signal coding method according to claim 2, wherein the orthogonal transformation is carried out in a field blocking mode when the predicted image is formed in a field prediction mode.

8. An image signal coding method according to claim 2, wherein the orthogonal transformation is carried out in a frame blocking mode when the predicted image is formed in a frame prediction mode.

9. An image signal coding method according to claim 1, wherein the third data is produced by extracting coefficient data included in the predetermined portion extracted when producing the second data from the first data.

10. An image signal coding method according to claim 1, wherein a motion vector detected in producing the first data is calculated by scale transformation, and the motion vector is used for the motion compensation of the second data.

11. An image signal coding method according to claim 1, wherein the motion compensation of the second data is carried out in a prediction mode on the basis of the motion vector detected in producing the first data.

12. An image signal coding method according to claim 11, wherein the motion compensation is produced by interpolating or extrapolating pixels at the same position in the same field as those of the pixels used for forming the first data.

13. An image signal coding method according to claim 1, wherein the second data and the third data are formed in the field prediction mode when the predetermined predicted image is formed in the field prediction mode.

14. An image signal coding method according to claim 1, wherein the second data and the third data are formed in the frame prediction mode.

15. An image signal coding method according to claim 5, wherein data representing an interlace structure and data representing frequencies in a low-frequency band among the third data are extracted.

16. An image signal decoding method that produces predetermined coefficient data by the transformation or blocking of difference image signal representing the difference from a predetermined predicted image, transmits first data obtained by coding the coefficient data, produces second data by the inverse transformation or reconstruction of the coefficient data, extracts the predetermined portion of the coefficient data, produces third data by the inverse transformation or reconstruction of the coefficient data included in the predetermined portion, extracts data corresponding to the predetermined portion from the second data, produces fourth data by the inverse transformation or reconstruction of the data extracted from the second data, calculates the difference between the third data and the fourth data, and decodes the coded difference as fifth data, said image signal decoding method comprising:

extracting the predetermined portion of the first data;

producing sixth data by the inverse transformation or reconstruction of the data included in the predetermined portion; and

adding the fifth data and the sixth data to decode an image corresponding to the predetermined portion.

17. An image signal decoding method according to claim 16, wherein the inverse transformation is the inverse orthogonal transformation of a block of N-N pixels.

18. An image signal decoding method according to claim 16, wherein the inverse transformation is wavelet inverse transformation.

19. An image signal decoding method according to claim 16, wherein the reconstruction is subband reconstruction.

20. An image signal decoding method according to claim 17, wherein the inverse transformation is IDCT.

21. An image signal decoding method according to claim 17, wherein the predetermined portion is a block of n∗n pixels (n = 1, 2, 3, ..., N-1).

22. An image signal decoding method according to claim 16, wherein data representing an interlace construction and data representing low-frequency components are extracted from the first data when the coefficient data is obtained in a frame DCT mode.

23. An image signal decoding method that decodes coded data obtained by the transformation or blocking of difference image signals representing the difference between a predicted image formed in a prediction mode on the basis of a motion vector, and an input image, characterized in that a predicted image for decoding is produced by motion compensation in the prediction mode.

24. An image signal decoding method according to claim 23, wherein the motion compensation is carried out so that the field of the pixels of the predicted image to be used for decoding coincide with the field of pixels of the predicted image used for coding when the prediction mode is the frame prediction mode.

25. An image signal decoding method according to claim 23, wherein the pixels of a predicted image used for decoding are produced by interpolation when the corresponding pixels of the predicted image used for coding are produced by interpolation, when carrying out motion compensation.

26. An image signal decoding method according to claim 23, wherein, when the predicted image used for decoding has pixels corresponding to the pixels of the predicted image used for coding when carrying out motion compensation, the pixels corresponding to those of the predicted image used for coding are used for motion compensation.

27. An image signal decoding method according to claim 23, wherein motion compensation is carried out so that the position of the pixels of the predicted image to be used for decoding coincides with that of the pixels of the predicted image used for coding when the prediction mode is the field prediction mode.

28. An image signal decoding method comprising: extracting a predetermined portion of coefficient data produced by the frame DCT or field DCT of predetermined image signals; and decoding the coefficient data included in the extracted predetermined portion of the coefficient data;

characterized in that coefficient data representing low-frequency signals is selected so that coefficient data representing an interlace structure is extracted as coefficient data for decoding, when the coefficient data is produced by frame DCT, and coefficient data of low-frequency signals is selected as coefficient data for decoding when the coefficient data is produced by field DCT.

29. An image signal recording medium capable of recording data coded by the image signal recording method stated in claim 1.

30. An image signal encoder that produces predetermined coefficient data by the transformation or blocking of a difference image signal representing the difference from a predetermined predicted image and codes the coefficient data, said image signal encoder comprising:
    a first means for subjecting the coefficient data to inverse transformation or reconstruction;
    a second means for producing first data by the motion compensation of the output of the first means;
    a third means for extracting a predetermined portion of the coefficient data;
    a fourth means for producing second data by the inverse transformation or reconstruction of the coefficient data included in the predetermined portion provided by the third means;
    a fifth means for producing third data by extracting data corresponding to the predetermined portion from the first data; and
    a sixth means for coding a difference signal representing the difference between the second data and the third data.

31. An image signal encoder according to claim 30, further comprising: a seventh means for the motion compensation of the second data.

32. An image signal decoder that produces predetermined coefficient data by the transformation or blocking of a difference image signal representing the difference from a predetermined predicted image, transmits first data obtained by coding the coefficient data, produces second data by the inverse transformation or reconstruction of the coefficient data, extracts a predetermined portion of the coefficient data, produces third data by the inverse transformation or reconstruction of the coefficient data included in the predetermined portion, extracts data corresponding to the predetermined portion from the second data, produces fourth data by the inverse transformation or reconstruction of the extracted data, calculates the difference between the third data and the fourth data, and decodes fifth data obtained by coding the difference, said image signal decoder comprising:
    a first decoding means for decoding data included in the predetermined portion among the first data;
    a second decoding means for decoding the fifth data; and
    an image reproducing means for reproducing an image corresponding to the predetermined portion on the basis of the respective outputs of the first decoding means and the second decoding means.

33. An image signal decoder according to claim 32, wherein said image reproducing means has a motion compensating means for motion compensation.

# FIG. 1

HD VIDEO SIGNAL

50 MV DETECTING CIRCUIT
51 FRAME MEMORY
53
54 PREDICTION MODE SELECTING CIRCUIT
SUM OF ABSOLUTE VALUES
PREDICTION MODE
MOTION VECTOR

56 8×8 DCT
57 Q
60 IQ
61 8×8 IDCT
58 VLC
62
63 FULL-RESOLUTION FRAME MEMORY
64 MC

a1
a2
a3

HD BIT STREAM
HDTV SIGNAL

111 8×8 DCT
112
117
118 IQ
119 4×4 IDCT
113 4×4 IDCT
120

a4
a5
a6

1/4 RESOLUTION SDTV SIGNAL

101
103

# FIG. 2

HD BIT STREAM → IVLC (71) → IQ (72) → 73 → 8×8 IDCT → ⊕ (74) → HDTV SIGNAL

b1=a1    b3=a3

b2=a2    75    FULL-RESOLUTION FRAME MEMORY

MC (76)

82: [0 / 0 0]

91: 8×8 DCT    92: [0 / 0 0]    93: 4×4 IDCT    b5=a5    b6=a6

b4=a4

83: 4×4 IDCT → ⊕ (84) → SDTV SIGNAL

131    133

26

EP 0 577 428 A2

# FIG. 3

EP 0 577 428 A2

# FIG.4

131

HD BIT STREAM →

QUANTIZING SCALE

IVLC → IQ → 8×8 IDCT → (d1) → ⊕ (74) → (d3) → HDTV SIGNAL

71    72    73

(d2) ↑

MOTION VECTOR

PREDICTION MODE

76 → MC | FULL-RESOLUTION FRAME MEMORY (75)

HD BIT STREAM →

141      142    82

IVLC → IQ → [0 / 0 0] 4×4 Data → 4×4 IDCT → d4=a4 → ⊕ (84) → d6=a5+a4=a6 → SDTV SIGNAL

QUANTIZING SCALE

83

d5=a5−c7+c7=a5

MOTION VECTOR

⊕ (152)

SCALING CIRCUIT

87

152

d7=c7

PREDICTION MODE

151                86    85

8×8 − 4×4 DIFFERNECE BIT STREAM →

IVLC → d9=a5−c7 → MC | 1/4 RESOLUTION FRAME MEMORY

132

EP 0 577 428 A2

28

# FIG. 5

FIG. 5

EP 0 577 428 A2

# FIG. 6

EP 0 577 428 A2

131

QUANTIZING SCALE

HD BIT STREAM → IVLC → IQ → 8×8 IDCT → f1 → ⊕ → f3 → HDTV SIGNAL

74

f2

71  72  73  76

MOTION VECTOR

PREDICTION MODE

75

MC  FULL-RESOLUTION FRAME MEMORY

---

141  QUANTIZ-ING SCALE  142  82

HD BIT STREAM → IVLC → IQ → [0 0 / 0 0] → 4×4 Data → 4×4 IDCT → ⊕ → SDTV SIGNAL

f4 = a4

f6 = Rec(a5−e7) + f7 + a4 = c6

83  84

f5 = Rec(a5−e7) + f7

152

MOTION VECTOR

SCALING CIRCUIT

PREDICTION MODE 87

f7 = c7

86  85

151  461

8×8 − 4×4 DIFFERENCE BIT STREAM → IVLC → IQ → 4×4 IDCT

f9 = Rec(a5−e7)

462

QUANTIZING SCALE

MC  1/4 RESOLUTION FRAME MEMORY

132

# FIG. 7

EP 0 577 428 A2

FIG. 8

EP 0 577 428 A2

# FIG. 9

EP 0 577 428 A2

# FIG. 10

# FIG. 11

EP 0 577 428 A2

# FIG. 12

EP 0 577 428 A2

(HDTV)  (SDTV)

Upper Layer Reference  Lower Layer Reference

| | |
|---|---|

−2 ● ──────────────── ● −1  ( Odd → Even )  Mismatch of reference field

○ −1.5  −0.75 ○  Marge → Marge

● −1  ○ −0.5  ( Even → Marge )  Mismatch of reference field

○ 0.5  ○ −0.25  Marge → Marge

vertical MV = 0 ●  vertical MV = 0 ◙  Odd → Odd

○ 0.25  Marge → Marge

○ 0.5  ● 1  ○ 0.5  ( Even → Marge )  Mismatch of reference field

○ 1.5  0.75 ○  Marge → Marge

2 ●  ● 1  ( Odd → Even )  Mismatch of reference field

○ 2.5  1.25 ○  Marge → Marge

● 3  ○ 1.5  ( Even → Marge )  Mismatch of reference field

○ 3.5  ○ 1.75  Marge → Marge

4 ●  ◙ 2 Odd  Odd → Odd

Odd  ○ Marge  A  ○ Marge  Marge → Marge

○ Even  ◙ q Marge  ( Even → Marge )  Mismatch of reference field

○ Marge  ◙ r Marge  Marge → Marge

● Odd  ◙ Even  B  ( Odd → Even )  Mismatch of reference field

○  ◙  Marge → Marge

●  ◙  ( Even → Marge )  Mismatch of reference field

○  ◙  Marge → Marge

●  ◙  Odd → Odd

Odd  Even  Odd  Even

(a)  (b)

● REFERENCE PIXEL

○ INTERPOLATED PIXEL

☐ 1/4 RESOLUTION PREDICTED PIXEL

$p = (3A + B)/4$
$q = (A + B)/2$
$r = (A + 3B)/4$

# FIG. 13

(HDTV)

Upper Layer Reference

vertical MV=0           vertical MV=0

$\frac{a+b}{2}$

$\frac{b+c}{2}$

$\frac{3a'+b'}{4}$

$\frac{a'+3b'}{4}$

$\frac{3b'+z'}{4}$

Odd     Even     Odd     Even

(a)           (b)

●    REFERENCE PIXEL

○    INTERPOLATED PIXEL

□   1/4 RESOLUTION PREDICTED PIXEL

# FIG. 14

(HDTV)　　　　　(SDTV)

Upper Layer Reference　　Lower Layer Reference

(a)　　　　(b)

● REFERENCE PIXEL

○ INTERPOLATED PIXEL

□ 1/4 RESOLUTION PREDICTED PIXEL

$p=(3A+D)/4$

$q=(3D+B)/4$

$r=(3D+A)/4$

$s=(A+C)/2$

# FIG. 15

(HDTV)                    (SDTV)

Upper Layer Reference       Lower Layer Reference

(a)                    (b)

●   REFERENCE PIXEL

○   INTERPOLATED PIXEL

□   1/4 RESOLUTION PREDICTED PIXEL

$$q = (3D + B)/4$$
$$s = (A + C)/2$$
$$p = (A + q)/2 = (4A + B + 3D)/8$$
$$r = (q + s)/2 = (2A + B + 2C + 3D)/4$$

# FIG.16

(HDTV)  (SDTV)

Upper Layer Reference  Lower Layer Reference

Odd  Even  Odd  Even

(a)  (b)

● REFERENCE PIXEL

○ INTERPOLATED PIXEL

□ 1/4 RESOLUTION PREDICTED PIXEL

$p = (3A+B)/4$

$q = (A+B)/2$

$r = (3B+A)/4$

# FIG. 17

EP 0 577 428 A2

FIG.18(a)

COEFFICIENT EXTRACTION IN THE FIELD DCT MODE

FIG.18(b)

(b−1)                    (b−2)                    (b−3)

COEFFICIENT EXTRACTION IN THE FIELD DCT MODE

FIG. 19

# FIG. 20

EP 0 577 428 A2

# FIG 21

EP 0 577 428 A2

# FIG. 22

EP 0 577 428 A2

# FIG. 23

EP 0 577 428 A2

# FIG. 24

EP 0 577 428 A2

# FIG. 25

SUBSTRATE GLASS

RECORDING MATERIAL — PHOTORESIST

MOLDING DIE — METALLIC STAMPER

MOLDING MATERIAL — PMMA PC 2P

REFLECTIVE FILM FORMING MATERIAL

RECORDING FILM FORMING MATERIAL

CARTRIDGE

HUB

LABEL

| SUBSTRATE FABRICATION | → | RECORDING | → | METALLIC MASTER PLATE FABRICATION | → | INJECTION MOLDING | → | FILM FORMING | → | POST PROCESSING | → FINISH |

LASER RECORDING APPARATUS

ELECTRO FORMING APPARATUS

INJECTION IC, 2P

EVAPORATION SPUTTERING SPIN COATING

SHAPING JOINING LABELING HUB MOUNTING ENCASING

OPTICAL DISK

| SOFTWARE CREATION | → | EDITION |

RECORDING APPARATUS

DISK FORMING PROCESS

MASTERING PROCESS

OPTICAL DISK FABRICATING PROCESS

EP 0 577 428 A2

# FIG. 26

VIDEO ENCODER — 501
BUFFER — 503
MPX — 505
ECC — 506
MOD — 507
PREMASTERING — 508
RECORDING

AUDIO ENCODER — 502
BUFFER — 504

SOFTWARE CREATION

# FIG. 27

EP 0 577 428 A2

# FIG. 28

t = t₁      PC1

t = t₂      PC2

t = t₃      PC3

PC12

PC23

EP 0 577 428 A2

# FIG. 29

GROUP OF PICTURES

F1 F2 F3 F4 F5 F6 F7 F8 F9 F10 F11 F12 F13 F14 F15 F16 F17

I   B   P   B   P   B   P   B   P   B   P   B   P   B   P   B   P ——→ t

(A) FORWARD PREDICTED P-PICTURE

F1 F2 F3 F4 F5 F6 F7 F8 F9 F10 F11 F12 F13 F14 F15 F16 F17

I   B   P   B   P   B   P   B   P   B   P   B   P   B   P   B   P ——→ t

(B) BILATERAL PREDICTED B-PICTURE

I, P AND B PICTURES

EP 0 577 428 A2

# FIG. 30

PRINCIPLE OF MOVING VIDEO SIGNAL CODING METHOD

FIG. 31

# FIG. 32

EP 0 577 428 A2

INPUT IMAGE ───────►
┌─────────────────┐        ┌─────────────────┐        ┌─────────────────┐
│       21        │        │       22        │        │       23        │
│      8×8        │   ───► │      4×4        │   ───► │      4×4        │   ───►  IMAGE OF HALF-
│   EXTRACTING    │        │   EXTRACTING    │        │      IDCT       │         RESOLUTION WITH
│    CIRCUIT      │        │    CIRCUIT      │        │                 │         RESPECT TO THE
└─────────────────┘        └─────────────────┘        └─────────────────┘         VERTICAL AND
                                                                                   HORIZONTAL

9

# FIG. 33

| d(0,0) | d(0,1) | d(0,2) | d(0,3) | d(0,4) | d(0,5) | d(0,6) | d(0,7) |
|--------|--------|--------|--------|--------|--------|--------|--------|
| d(1,0) | d(1,1) | d(1,2) | d(1,3) | d(1,4) | d(1,5) | d(1,6) | d(1,7) |
| d(2,0) | d(2,1) | d(2,2) | d(2,3) | d(2,4) | d(2,5) | d(2,6) | d(2,7) |
| d(3,0) | d(3,1) | d(3,2) | d(3,3) | d(3,4) | d(3,5) | d(3,6) | d(3,7) |
| d(4,0) | d(4,1) | d(4,2) | d(4,3) | d(4,4) | d(4,5) | d(4,6) | d(4,7) |
| d(5,0) | d(5,1) | d(5,2) | d(5,3) | d(5,4) | d(5,5) | d(5,6) | d(5,7) |
| d(6,0) | d(6,1) | d(6,2) | d(6,3) | d(6,4) | d(6,5) | d(6,6) | d(6,7) |
| d(7,0) | d(7,1) | d(7,2) | d(7,3) | d(7,4) | d(7,5) | d(7,6) | d(7,7) |

# FIG. 34

| d(0,0) | d(0,1) | d(0,2) | d(0,3) |
|--------|--------|--------|--------|
| d(1,0) | d(1,1) | d(1,2) | d(1,3) |
| d(2,0) | d(2,1) | d(2,2) | d(2,3) |
| d(3,0) | d(3,1) | d(3,2) | d(3,0) |

# FIG. 35

FIG. 36 (A)

Y[1]  Y[2]

Y[3]  Y[4]

Cb[5]  Cr[6]

UNIT FOR MOTION COMPENSATION

FRAME PREDICTION MODE

FIG. 36 (B)

Y[1]  Y[2]

Y[3]  Y[4]

Cb[5]  Cr[6]

UNIT FOR MOTION COMPENSATION

UNIT FOR MOTION COMPENSATION

FRAME PREDICTION MODE

————— DATA OF THE FIRST FIELD

·········· DATA OF THE SECOND FIELD

## FIG.37(A)

Y[1]

Y[2]

Y[3]

Y[4]

Cb[5]

Cr[6]

FRAME DCT MODE

## FIG.37(B)

Y[1]

Y[2]

Y[3]

Y[4]

Cb[5]

Cr[6]

FIELD DCT MODE

——————————  DATA OF THE FIRST FIELD

------------  DATA OF THE SECOND FIELD

EP 0 577 428 A2

# FIG. 38

| 1 | 2 | 6 | 7 | 15 | 16 | 28 | 29 |
|----|----|----|----|----|----|----|----|
| 3 | 5 | 8 | 14 | 17 | 27 | 30 | 43 |
| 4 | 9 | 13 | 18 | 26 | 31 | 42 | 44 |
| 10 | 12 | 19 | 25 | 32 | 41 | 45 | 54 |
| 11 | 20 | 24 | 33 | 40 | 46 | 53 | 55 |
| 21 | 23 | 34 | 39 | 47 | 52 | 56 | 61 |
| 22 | 35 | 38 | 48 | 51 | 57 | 60 | 62 |
| 36 | 37 | 49 | 50 | 58 | 59 | 63 | 64 |

ZIGZAG SCANNING

# FIG. 39

INPUT BIT STREAM

RECEIVING BUFFER MEMORY — 70

VARIABLE-LENGTH CODING CIRCUIT — 71

INVERSE QUANTIZING CIRCUIT — 72

IDCT (8×8) — 73

CONVERTING CIRCUIT — 77

74

CONVERTING CIRCUIT — 78

HDTV REPRODUCED IMAGE

DCT FLAG
PREDICTION MODE FLAG
MOTION VECTOR
PREDICTION MODE
QUANTIZING SCALE

MOTION COMPENSATING CIRCUIT — 76

FORWARD PREDICTED IMAGE — 75a

BANK CHANGE

BACKWARD PREDICTED IMAGE — 75b

75

INVERSE QUANTIZING CIRCUIT — 81

SELECTING CIRCUIT — 82

IDCT (4×4) — 83

CONVERTING CIRCUIT — 88

84

CONVERTING CIRCUIT — 89

SDTV REPRODUCED IMAGE

SCALING CIRCUIT — 87

MOTION COMPENSATING CIRCUIT — 86

FORWARD PREDICTED IMAGE — 85a

BANK CHANGE

BACKWARD PREDICTED IMAGE — 85b

85

EP 0 577 428 A2